(19) Europäisches Patentamt
European Patent Office
Office européen des brevets

(11) **EP 4 447 579 A1**

(12) **EUROPEAN PATENT APPLICATION**
published in accordance with Art. 153(4) EPC

(43) Date of publication:
**16.10.2024 Bulletin 2024/42**

(21) Application number: **23737113.3**

(22) Date of filing: **05.01.2023**

(51) International Patent Classification (IPC):
***H04W 72/02*** (2009.01)     ***H04W 72/04*** (2023.01)

(52) Cooperative Patent Classification (CPC):
**H04W 72/02; H04W 72/04**

(86) International application number:
**PCT/CN2023/070759**

(87) International publication number:
**WO 2023/131251 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.01.2022   CN 202210023636**
**25.02.2022   CN 202210179902**

(71) Applicant: **Huawei Technologies Co., Ltd.**
**Shenzhen, Guangdong 518129 (CN)**

(72) Inventor: **LIU, Yun**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57)     A communication method and apparatus are disclosed, to increase usage of transmission resources of a terminal device, thereby improving a data transmission success rate of the terminal device. A first terminal device receives first DCI from a network device, determines, based on the first DCI, at least one time domain range and/or at least one frequency domain range indicated by the first DCI, and determines, in all transmission resources in the at least one time domain range and/or the at least one frequency domain range, whether some transmission resources can be used by the first terminal device to transmit data. The network device indicates the at least one time domain range and/or the at least one frequency domain range to the first terminal device, so that the first terminal device contends for a transmission resource in more transmission resources than transmission resources required by the first terminal device. In this way, redundant space is increased for the first terminal device to contend for the transmission resource, and a success rate of obtaining the transmission resource through contention by the first terminal device can be increased, thereby increasing the data transmission success rate.

FIG. 4

**Description**

**CROSS-REFERENCE TO RELATED APPLICATIONS**

This application claims priority to Chinese Patent Application No. 202210023636.2, filed with the China National Intellectual Property Administration on January 10, 2022 and entitled "METHOD FOR DETERMINING FEEDBACK INFORMATION IN MODEL 1 SCENARIO IN SL-U", which is incorporated herein by reference in its entirety; and this application claims priority to Chinese Patent Application No. 202210179902.0, filed with the China National Intellectual Property Administration on February 25, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In a sidelink (sidelink) transmission scenario, in a transmission manner, a network device schedules, for a terminal device 1, a resource for transmitting data, and the terminal device 1 sends the data to a terminal device 2 on the resource scheduled by the network device; and after the terminal device 2 feeds back to the terminal device 1, the terminal device 1 feeds back, to the network device, information indicating whether the data is successfully sent.

Currently, when the network device schedules, for the terminal device 1, the resource for transmitting data, the network device indicates a time-frequency position of the transmission resource, so that the terminal device 1 determines that the resource is used to transmit the data. However, in practice, the resource indicated by the network device may be occupied by another terminal device. As a result, the terminal device 1 cannot use the resource to transmit the data, and the terminal device 1 fails to transmit the data.

**SUMMARY**

This application provides a communication method and apparatus, to increase usage of transmission resources of a terminal device, thereby improving a data transmission success rate of the terminal device.

According to a first aspect, this application provides a communication method. The method may include: A first terminal device receives first downlink control information (downlink control information, DCI) from a network device, where the first DCI indicates at least one time domain range and/or at least one frequency domain range; the first terminal device determines the at least one time domain range and/or the at least one frequency domain range based on the first DCI; and determines, in all transmission resources in the at least one time domain range and/or the at least one frequency domain range, whether some transmission resources can be used by the first terminal device to transmit data.

According to the foregoing method, the network device indicates the at least one time domain range and/or the at least one frequency domain range to the first terminal device, so that the first terminal device contends for a transmission resource in more transmission resources than transmission resources required by the first terminal device. In this way, redundant space is increased for the first terminal device to contend for the transmission resource, and a success rate of obtaining the transmission resource through contention by the first terminal device can be increased, thereby increasing the data transmission success rate.

In a possible design, that the first DCI indicates the at least one time domain range may be implemented in the following manner: The first DCI may indicate a time domain position in which a first physical sidelink feedback channel (physical sidelink feedback channel, PSFCH) is located, the time domain position of the first PSFCH corresponds to a plurality of slots, and all or some of the plurality of slots may be a first time domain range, and the at least one time domain range includes the first time domain range. In this way, the first terminal device can accurately determine the at least one time domain range with reference to the time domain position in which the first PSFCH is located.

In a possible design, that the first DCI indicates the at least one time domain range may be implemented in the following manner: The first DCI may be used to determine a first time domain position and a first time gap, a range from a second time domain position to the first time domain position may be a second time domain range, the at least one time domain range includes the second time domain range, and the second time domain position is a time domain position determined based on a slot in which the first DCI is located and the first time gap. In this way, the first terminal device can accurately determine the at least one time domain range in a simple method.

In a possible design, that the first DCI indicates the at least one time domain range may be implemented in the following manner: The first DCI may indicate a third time domain position and a fourth time domain position, a range from the third time domain position to the fourth time domain position is a third time domain range, and the at least one time domain range includes the third time domain range. In this way, the first terminal device can accurately determine the at least one time domain range in a simple method.

In a possible design, that the first DCI indicates the at least one time domain range may be implemented in the following manner: The first DCI may be used to determine N time domain positions, a start position of each of N time domain ranges is one of the N time domain positions, duration of each time domain range is first duration, the at least one time domain range includes the N time domain ranges, and N is an integer greater than or equal to 1. In this way, the first terminal device can accurately determine the N time domain ranges based on the N time domain positions and corresponding duration.

In a possible design, that the first DCI indicates the at least one time domain range may be implemented in the following manner: The first DCI may indicate a first transmission resource, the first transmission resource corresponds to a second PSFCH, a plurality of slots corresponding to the second PSFCH are a fourth time domain range, and the at least one time domain range includes the fourth time domain range. In this way, the first terminal device can further determine the at least one time domain range based on the transmission resource indicated by the first DCI, and an implementation is flexible.

In a possible design, that the first DCI indicates the at least one frequency domain range may be implemented in the following manner: The first DCI may indicate a first frequency domain position and a second frequency domain position, a range from the first frequency domain position to the second frequency domain position is a first frequency domain range, and the at least one frequency domain range includes the first frequency domain range. In this way, the first terminal device can accurately determine the at least one frequency domain range in a simple method.

In a possible design, that the first DCI indicates the at least one frequency domain range may be implemented in the following manner: The first DCI may be used to determine M frequency domain positions, a start position of each of M frequency domain ranges is one of the M frequency domain positions, a continuous frequency bandwidth of each frequency domain range is a first frequency bandwidth, the at least one frequency domain range includes the M frequency domain ranges, and M is an integer greater than or equal to 1. In this way, the first terminal device can accurately determine the M frequency domain ranges based on the M frequency domain positions and a corresponding continuous frequency bandwidth.

In a possible design, when the at least one time domain range is a plurality of time domain ranges, when the first terminal device determines that the some transmission resources used by the first terminal device to transmit the data do not exist in the all transmission resources, the first terminal device may send transmission failure information to the network device based on a time domain position in which a PSFCH corresponding to a last time domain range in the at least one time domain range is located. In this way, the first terminal device can return the transmission failure information only once, to indicate that the transmission resource is not obtained through contention in all previous time domain ranges, thereby reducing signaling overheads.

In a possible design, when the first terminal device determines that the some transmission resources used by the first terminal device to transmit the data do not exist in the all transmission resources, the first terminal device may determine, in a first resource pool, a transmission resource used by the first terminal device to transmit the data, where the first resource pool includes a plurality of transmission resources used to transmit data. In this way, when the first terminal device fails to obtain, through contention, the transmission resource scheduled by the network device, the first terminal device can switch a resource selection mode, to improve a success rate of obtaining the transmission resource through contention by the first terminal device.

In a possible design, the first terminal device may send transmission success information to the network device. In this way, when the first terminal device independently selects the transmission resource from the first resource pool, the network device can be prevented from rescheduling a transmission resource for the first terminal device.

In a possible design, when the first terminal device determines, in the first resource pool, the transmission resource used by the first terminal device to transmit the data, the first terminal device may determine, in the first resource pool in a packet delay budget (packet delay budget, PDB), the transmission resource used by the first terminal device to transmit the data. In this way, when the first terminal device continues to contend for the transmission resource beyond the time domain range and/or the frequency domain range indicated by the network device, a time range cannot exceed the PDB, thereby reducing a data delay.

In a possible design, the first terminal device determines, in the first resource pool in a fifth time domain position, that the first transmission resource can be used by the first terminal device to transmit the data, and the fifth time domain position is a time domain position determined by the first terminal device for sending physical uplink control channel (physical uplink control channel, PUCCH) information; and in this case, the first terminal device may determine that a priority of sending the PUCCH information in the fifth time domain position is higher than a priority of sending the data in the fifth time domain position. In this way, when power is limited, the first terminal device can preferably send the PUCCH information in the fifth time domain position.

In a possible design, when the first terminal device determines that the transmission resource used by the first terminal device to transmit the data does not exist in the first resource pool, the first terminal device may send a first scheduling request to the network device, where the first scheduling request is used to request the network device to reschedule a transmission resource for the first terminal device. In this way, when the first terminal device fails to independently select the transmission resource, the network device can continue to schedule the transmission resource for the first terminal device.

In a possible design, when the first terminal device determines that the some transmission resources used by the first terminal device to transmit the data do not exist in the all transmission resources, the first terminal device may send first information to the network device, where the first information may indicate that the first terminal device determines that the some transmission resources used by the first terminal device to transmit the data do not exist in the all transmission resources. In this way, the first terminal device can notify the network device of information indicating that the transmission resource is not obtained through contention.

In a possible design, the first information may include a first bit, and the first information indicates, by using the first bit, that the first terminal device determines that the some transmission resources used by the first terminal device to transmit the data do not exist in the all transmission resources. In this way, the first terminal device can accurately notify, based on the first information, the network device that the first terminal device fails to obtain the transmission resource through contention.

In a possible design, when the first terminal device determines that the some transmission resources used by the first terminal device to transmit the data do not exist in the all transmission resources, the first terminal device skips sending PUCCH information to the network device. In this way, whether the first terminal device obtains the transmission resource through contention can be determined based on whether the first terminal device sends the PUCCH information.

According to a second aspect, this application provides a communication method. The method may include: A network device determines first DCI; and sends the first DCI to the first terminal device, where the first DCI may indicate at least one time domain range and/or at least one frequency domain range, some transmission resources in all transmission resources in the at least one time domain range and/or the at least one frequency domain range may be used by a first terminal device to determine whether the transmission resources can be used by the first terminal device to transmit data.

According to the foregoing method, the network device indicates the at least one time domain range and/or the at least one frequency domain range to the first terminal device, so that the first terminal device contends for a transmission resource in more transmission resources than transmission resources required by the first terminal device. In this way, redundant space is increased for the first terminal device to contend for the transmission resource, and a success rate of obtaining the transmission resource through contention by the first terminal device can be increased, thereby increasing a data transmission success rate.

In a possible design, that the first DCI indicates the at least one time domain range may be implemented in the following manner: The first DCI may indicate a time domain position in which a first PSFCH is located, the time domain position of the first PSFCH corresponds to a plurality of slots, and all or some of the plurality of slots may be a first time domain range, and the at least one time domain range includes the first time domain range. In this way, the first terminal device can accurately determine the at least one time domain range with reference to the time domain position in which the first PSFCH is located.

In a possible design, that the first DCI indicates the at least one time domain range may be implemented in the following manner: The first DCI may be used to determine a first time domain position and a first time gap, a range from a second time domain position to the first time domain position is a second time domain range, the at least one time domain range includes the second time domain range, and the second time domain position is a time domain position determined based on a slot in which the first DCI is located and the first time gap. In this way, the first terminal device can accurately determine the at least one time domain range in a simple method.

In a possible design, that the first DCI indicates the at least one time domain range may be implemented in the following manner: The first DCI may indicate a third time domain position and a fourth time domain position, a range from the third time domain position to the fourth time domain position is a third time domain range, and the at least one time domain range includes the third time domain range. In this way, the first terminal device can accurately determine the at least one time domain range in a simple method.

In a possible design, that the first DCI indicates the at least one time domain range may be implemented in the following manner: The first DCI may be used to determine N time domain positions, a start position of each of N time domain ranges is one of the N time domain positions, duration of each time domain range is first duration, the at least one time domain range includes the N time domain ranges, and N is an integer greater than or equal to 1. In this way, the first terminal device can accurately determine the N time domain ranges based on the N time domain positions and corresponding duration.

In a possible design, that the first DCI indicates the at least one time domain range may be implemented in the following manner: The first DCI may indicate a first transmission resource, the first transmission resource corresponds to a second PSFCH, a plurality of slots corresponding to the second PSFCH are a fourth time domain range, and the at least one time domain range includes the fourth time domain range. In this way, the first terminal device can further determine the at least one time domain range based on the transmission resource indicated by the first DCI, and an implementation is flexible.

In a possible design, that the first DCI indicates the at least one frequency domain range may be implemented in the following manner: The first DCI may indicate a first frequency domain position and a second frequency domain position, a range from the first frequency domain position to the second frequency domain position is a first frequency domain range, and the at least one frequency domain range includes the first frequency domain range. In this way, the first terminal device can accurately determine the at least one frequency domain range in a simple method.

In a possible design, that the first DCI indicates the at least one frequency domain range may be implemented in the following manner: The first DCI may be used to determine M frequency domain positions, a start position of each of M frequency domain ranges is one of the M frequency domain positions, a continuous frequency bandwidth of each frequency domain range is a first frequency bandwidth, the at least one frequency domain range includes the M frequency domain ranges, and M is an integer greater than or equal to 1. In this way, the first terminal device can accurately determine the M frequency domain ranges based on the M frequency domain positions and a corresponding continuous frequency bandwidth.

In a possible design, when the at least one time domain range is a plurality of time domain ranges, the network device may receive transmission failure information from the first terminal device based on a time domain position in which a PSFCH corresponding to a last time domain range in the at least one time domain range is located, where the transmission failure information may be sent by the first terminal device when the first terminal device determines that the some transmission resources used by the first terminal device to transmit the data do not exist in the all transmission resources. In this way, the first terminal device can return the transmission failure information only once, to indicate that the transmission resource is not obtained through contention in all previous time domain ranges, thereby reducing signaling overheads.

In a possible design, the network device may receive first information from the first terminal device, where the first information may indicate that the first terminal device determines that the some transmission resources used by the first terminal device to transmit the data do not exist in the all transmission resources. In this way, the network device may learn that the first terminal device fails to obtain the transmission resource through contention.

In a possible design, the first information may include a first bit, and the first information indicates, by using the first bit, that the first terminal device determines that the some transmission resources used by the first terminal device to transmit the data do not exist in the all transmission resources. In this way, the network device can accurately learn, based on the first information, that the first terminal device fails to obtain the transmission resource through contention.

According to a third aspect, this application further provides a communication apparatus. The communication apparatus may be a first terminal device, and the communication apparatus has a function of implementing the method according to the first aspect or the possible design examples of the first aspect. The function may be implemented by hardware or may be implemented by hardware executing corresponding software. The hardware or the software includes one or more modules corresponding to the foregoing function.

In a possible design, a structure of the communication apparatus includes a transceiver unit and a processing unit. These units may perform corresponding functions according to the first aspect or the possible design examples of the first aspect. For details, refer to detailed descriptions in the method example. Details are not described herein again.

In a possible design, a structure of the communication apparatus includes a transceiver and a processor, and optionally further includes a memory. The transceiver is configured to receive and send information or data, and is configured to communicate and interact with another device in a communication system. The processor is configured to support the communication apparatus in performing corresponding functions according to the first aspect or the possible design examples of the first aspect. The memory is coupled to the processor, and stores program instructions and data that are necessary for the communication apparatus.

According to a fourth aspect, this application further provides a communication apparatus. The communication apparatus may be a network device, and the communication apparatus has a function of implementing the method according to the second aspect or the possible design examples of the second aspect. The function may be implemented by hardware or may be implemented by hardware executing corresponding software. The hardware or the software includes one or more modules corresponding to the foregoing function.

In a possible design, a structure of the communication apparatus includes a transceiver unit and a processing unit. These units may perform corresponding functions according to the second aspect or the possible design examples of the second aspect. For details, refer to detailed descriptions in the method example. Details are not described herein again.

In a possible design, a structure of the communication apparatus includes a transceiver and a processor, and optionally further includes a memory. The transceiver is configured to receive and send information or data, and is configured to communicate and interact with another device in a communication system. The processor is configured to support the communication apparatus in performing corresponding functions according to the second aspect or the possible design examples of the second aspect. The memory is coupled to the processor, and stores program instructions and data that are necessary for the communication apparatus.

According to a fifth aspect, an embodiment of this application provides a communication system. The communication system may include the terminal device, the network device, and the like that are mentioned above.

According to a sixth aspect, an embodiment of this application provides a computer-readable storage medium. The computer-readable storage medium stores program instructions, and when the program instructions are run on a computer, the computer is enabled to perform the method according to the first aspect and any possible design of the first aspect or the second aspect and any possible design of the second aspect in embodiments of this application. For example, the computer-readable storage medium may be any usable medium accessible to the computer. By way of example but not limitation, the computer-readable medium may include a non-transient computer-readable medium, a random access memory (random access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be used to carry or store expected program code in a form of instructions or a data structure and can be accessed by a computer.

According to a seventh aspect, an embodiment of this application provides a computer program product, including computer program code or instructions, and when the computer program code or the instructions are run on a computer, the method according to the first aspect or any possible design of the first aspect or the second aspect or any possible design of the second aspect is performed.

According to an eighth aspect, this application further provides a chip, including a processor. The processor is coupled to a memory, and is configured to read and execute program instructions stored in the memory, so that the chip implements the method according to the first aspect or any possible design of the first aspect or the second aspect or any possible design of the second aspect.

For the third aspect to the eighth aspect and technical effect that can be achieved in the third aspect to the eighth aspect, refer to the foregoing descriptions of the technical effect that can be achieved in the first aspect or the possible solutions in the first aspect, or in the second aspect or the possible solutions in the second aspect. Details are not described herein again.

**BRIEF DESCRIPTION OF DRAWINGS**

FIG. 1 is a schematic diagram of an architecture of a communication system according to this application;
FIG. 2 shows a transmission process in a Mode 1 resource scheduling mode according to this application;
FIG. 3 is a schematic diagram of a resource position according to this application;
FIG. 4 is a schematic flowchart of a communication method according to this application;
FIG. 5 is a schematic diagram in which a first terminal device preempts a transmission resource according to this application;
FIG. 6 is a schematic diagram in which a first terminal device contends for a transmission resource in at least one time domain range according to this application;
FIG. 7 is a schematic diagram in which a first terminal device sends a PUCCH in a fifth time domain position, and continues to contend for a transmission resource after the fifth time domain position according to this application;
FIG. 8 is a schematic diagram of a 2-bit indication in a PUCCH according to this application;
FIG. 9 is a schematic diagram in which a first terminal device does not send PUCCH information to a network device when failing to obtain a transmission resource through contention according to this application;
FIG. 10 is a schematic diagram of a structure of a communication apparatus according to this application; and
FIG. 11 is a diagram of a structure of a communication apparatus according to this application.

**DESCRIPTION OF EMBODIMENTS**

The following further describes in detail this application with reference to accompanying drawings.
Embodiments of this application provide a communication method and apparatus, to increase usage of transmission resources of a terminal device, thereby improving a data transmission success rate of the terminal device. The method and the apparatus in this application are based on a same technical concept. Because problem-resolving principles of the method and the apparatus are similar, mutual reference may be made to implementations of the apparatus and the method, and repeated parts are not described.
In descriptions of this application, terms such as "first" and "second" are merely used for distinguishing and description, but should not be understood as indicating or implying relative importance, or should not be understood as indicating or implying a sequence.
In the descriptions in this application, "at least one (type)" refers to one or more (types), and "a plurality of (types)" refers to two or more (types).
In the descriptions of embodiments of this application, when "XX indicates YY", it indicates that this may be implemented by using a direct indication, or may be implemented by using an indirect indication. In other words, it indicates that YY may be determined by using XX. This is not limited in this application.

To describe technical solutions in embodiments of this application more clearly, the following describes, in detail with reference to the accompanying drawings, the communication method and apparatus provided in embodiments of this application.

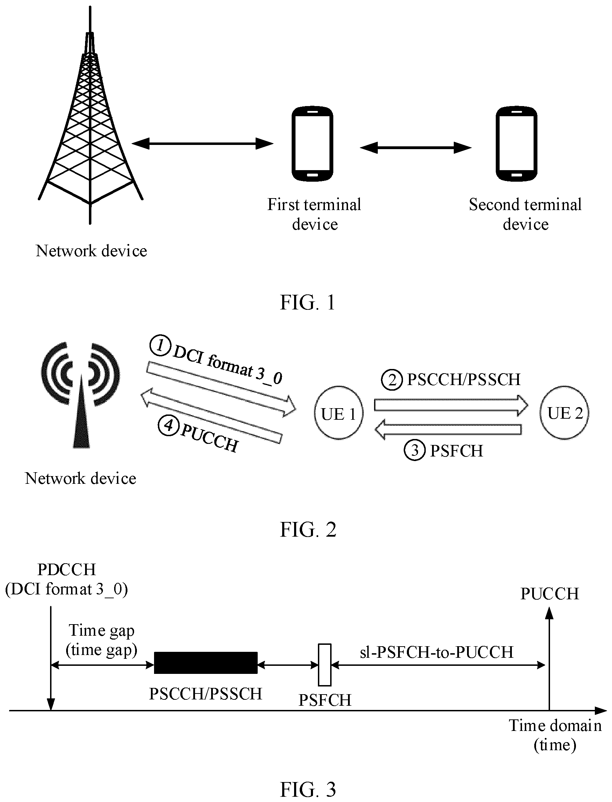

FIG. 1 shows an architecture of a communication system to which an embodiment of this application can be applied. The architecture of the communication system may include a network device and a terminal device. In the architecture of the communication system shown in FIG. 1, a first terminal device and a second terminal device are used as examples of the terminal device. Details are as follows:

The network device may be a device having a wireless transceiver function or a chip, a chip system, or the like that can be disposed in the network device. The network device includes but is not limited to: a base station (generation NodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP or transmission point, TP), and the like. The network device may alternatively be a network node that forms a gNB or a transmission point, for example, a baseband unit (BBU) or a distributed unit (distributed unit, DU).

In some deployments, the gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer. The DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified into a network device in an access network RAN, or the CU may be classified into a network device in a core network CN. This is not limited.

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a smart wearable device (smart glasses, a smart watch, a smart headset, or the like), a wireless terminal in a smart home (smart home), a vehicle user equipment (vehicle UE, VUE), a vehicle-mounted communication module, or the like. The terminal device may alternatively be a chip, a chip module (or a chip system), or the like that can be disposed in the device. An application scenario is not limited in embodiments of this application. In this application, the terminal device having the wireless transceiver function and the chip or the chip system that can be disposed in the terminal device are collectively referred to as a terminal device.

In the communication system, the network device may schedule, for the first terminal device, a transmission resource used by the first terminal device to send data to the second terminal device, and receive physical uplink control channel (physical uplink control channel, PUCCH) information fed back by the first terminal device.

For example, the communication system shown in FIG. 1 may be a sidelink (also referred to as a side link or direct link) (sidelink, SL) sidelink transmission scenario. A frequency band used in the scenario may include but is not limited to an unlicensed spectrum. For example, the unlicensed spectrum may include a frequency band close to 2.4 gigahertz (gigahertz, GHz), a frequency band close to 5.8 GHz, and the like worldwide.

It should be noted that the communication system shown in FIG. 1 may be but is not limited to a 5th generation (5th Generation, 5G) system, for example, a new radio access technology (new radio access technology, NR). Optionally, the method in embodiments of this application is further applicable to various future communication systems, for example, a 6th (6th Generation, 6G) system or another communication network.

It should be noted that a quantity of and types of devices shown in the communication system shown in FIG. 1 are merely examples. More devices may be in the communication system, and are not shown in FIG. 1.

For ease of understanding, the following first briefly describes some related technical knowledge in this application.

## 1. Sidelink resource pool (sidelink resource pool)

In NR, sidelink transmission is based on a resource pool. The resource pool is a logical concept. One resource pool may include a plurality of resources (which may also be referred to as physical resources, transmission resources, or the like), and any one of the resources is used to transmit data. When performing data transmission, a terminal device performs transmission by using a resource in the resource pool. For a process of selecting the resource to be used, there can be the following two cases:

Case 1: The terminal device is controlled by a network device, and the terminal device selects, based on indication information of the network device, a resource from the resource pool to perform the data transmission. The resource scheduling mode may be referred to as a mode 1 (Mode 1) mode.

Case 2: The terminal device independently randomly selects a resource from the resource pool to perform the data transmission.

## 2. Physical sidelink feedback channel (physical sidelink feedback channel, PSFCH)

Hybrid automatic repeat request (hybrid automatic repeat request, HARQ) feedback information for a physical sidelink shared channel (physical sidelink shared channel, PSSCH) is transmitted by using the PSFCH. Currently, SL HARQ feedback may be supported in unicast and multicast scenarios. Specifically, the transmitted HARQ feedback information may be as follows.

Unicast: If a terminal device 2 successfully decodes a PSSCH transport block (transport block, TB), the terminal device 2 transmits a HARQ-acknowledgement (acknowledgement, ACK) to a terminal device 1; or if the terminal device 2 fails to perform decoding, the terminal device 2 transmits a HARQ-negative acknowledgment (negative acknowledgment, NACK) to the terminal device 1.

Multicast: The following two options (options) may be specifically included.

Option 1: If the terminal device 2 fails to decode a PSCCH, the terminal device 2 transmits a HARQ-NACK to the terminal device 1, and does not transmit information in another case. In Option 1, a group of terminal devices that receive data may be supported to share a same PSFCH resource.

Option 2: If the terminal device 2 successfully decodes the PSCCH, the terminal device 2 transmits a HARQ-ACK to the terminal device 1; or if the terminal device 2 fails to decode the PSCCH, the terminal device 2 transmits a HARQ-NACK to the terminal device 1. In Option 2, each terminal device may be supported in using one separate PSFCH resource.

In a resource pool, PSFCH resources appear in a period of N slots (slots), where a value of N may be 1, 2, or 4. For a PSSCH that appears in a slot n, a corresponding PSFCH appears in a slot n+a, where a may be a smallest integer greater than or equal to K. Currently, a value of K is not determined. It is assumed that K of all terminal devices is a same value, and when the PSFCH resource appears in the period of N, PSFCHs corresponding to N PSSCHs share one PSFCH resource.

## 3. Mode 1 resource scheduling mode

FIG. 2 shows a transmission process in a Mode 1 resource scheduling mode. As shown in FIG. 2, the transmission process may be divided into four steps: Step 1: A network device sends downlink control information (for example, downlink control information format 3_0, (downlink control information format 3_0, DCI format 3_0)) to UE 1, and schedules a resource to the UE 1 by using the DCI format 3_0, where the resource is used by the UE 1 to send data to UE 2. Step 2: The UE 1 sends the data to the UE 2 on the scheduled resource, and as shown in FIG. 2, the UE 1 may send PSCCH or PSSCH information to the UE 2. Step 3: The UE 2 returns PSFCH feedback information to the UE 1. Step 4: The UE 1 returns PUCCH information to the network device, where the PUCCH information carries related information indicating whether the UE 1 successfully sends the data.

The DCI format 3_0 carries some information fields, where these information fields are used to determine time gaps between the steps. For example, as shown in FIG. 3, the time gaps (time gaps) carried in the DCI format 3_0 may be used to determine a time gap between the DCI format 3_0 and a first scheduled resource, a parameter sl-PSFCH-to-PUCCH field may be used to determine a time gap between the PSFCH and the PUCCH, and a time gap between the transmitted data and the PSFCH may be obtained based on information such as a PSFCH configuration period of a resource pool. In addition, it should be noted that the DCI format 3_0 carries information used to determine time-frequency positions of transmission resources, and a time relationship of the resources is determined relative to a time position of a first resource.

For example, after the PDCCH is used to carry the DCI format 3_0, a time domain position in which a first PSCCH/PSSCH is located may be determined based on a "time gap" field in the DCI format 3_0, a time-frequency position (a black part in FIG. 3) of a scheduled resource is determined based on a frequency domain resource assignment (frequency resource assignment) and a time domain resource assignment (time resource assignment) that are indicated by the DCI format 3_0, a time position of the PSFCH is determined based on the resource at the black part, and then a time position for sending the PUCCH is determined based on the time position of the PSFCH and the sl-PSFCH-to-PUCCH carried in a PSFCH-to-HARQ feedback timing indicator (PSFCH-to-HARQ feedback timing indicator) in the DCI format 3_0. Specifically, resource information of the PUCCH may be determined by using a PUCCH resource indicator (PUCCH resource indicator) in the DCI format 3_0.

4. Sidelink transmission on an unlicensed spectrum (unlicensed band), SL-U for short

SL-U is an important topic discussed in the R18 standard. Because the spectrum is the unlicensed spectrum, there is usually a channel occupation requirement. Specifically, at least 80% of the spectrum is occupied in a bandwidth at a granularity of 20 megahertz (megahertz, MHz). For example, 80% of a frequency band is occupied in lowest and highest occupied frequency domain resource positions within 20 MHz.

Currently, when the Mode 1 resource scheduling mode described above is used, for example, in an SL-U scenario, the transmission resource scheduled by the network device for the first terminal device may be preempted by another terminal device. As a result, the first terminal device fails to obtain a channel through contention, and the data cannot be sent to the second terminal device, that is, the data transmission fails. Based on this, this application provides a communication method and apparatus, to improve a success rate of preempting a transmission resource by a first terminal device by providing redundant space for resource scheduling of a network device, thereby improving a data transmission success rate.

It should be noted that in embodiments of this application, transmission resource scheduling may be implemented by the network device, a processor in the network device, a chip or a chip system, a functional module, or the like. The transmission resource may be preempted by the terminal device, a processor in the terminal device, a chip or a chip system, a functional module, or the like. Similarly, an operation of another device in this application may be implemented by the device, a processor in the device, a chip or a chip system, a functional module, or the like. This is not limited in this application. In the following embodiments, only the first terminal device, the network device, and the like are used as examples to describe in detail the communication method provided in this application, but this application is not limited thereto.

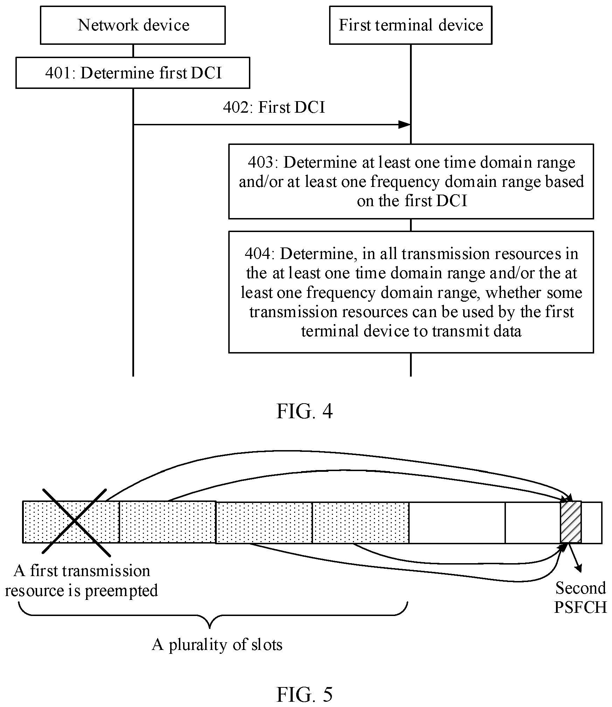

Based on the foregoing description, the communication method provided in embodiments of this application is applicable to the communication system shown in FIG. 1. Refer to FIG. 4. A specific procedure of the method may include the following steps.

Step 401: A network device determines first DCI, where the first DCI may indicate at least one time domain range and/or at least one frequency domain range, or it may be described as that the first DCI is used to determine at least one time domain range and/or at least one frequency domain range. Optionally, the time domain range may alternatively be described as another description like a time period, and the frequency domain range may alternatively be described as another description like a frequency domain segment. This is not limited in this application.

Step 402: The network device sends the first DCI to a first terminal device.

Step 403: The first terminal device determines the at least one time domain range and/or the at least one frequency domain range based on the first DCI.

Step 404: The first terminal device determines, in all transmission resources in the at least one time domain range and/or the at least one frequency domain range, whether some transmission resources can be used by the first terminal device to transmit data.

Alternatively, step 404 may be described as that the first terminal device determines, in all transmission resources in the at least one time domain range and/or the at least one frequency domain range, whether there are some transmission resources used by the first terminal device to transmit data. Alternatively, step 404 may be described as that the first terminal device contends for some transmission resources in all transmission resources in the at least one time domain range and/or the at least one frequency domain range.

For example, step 404 may be any one of the following three cases: (1) The first terminal device contends for the transmission resource in the at least one time domain range; (2) the first terminal device contends for the transmission resource in the at least one frequency domain range; and (3) the first terminal device contends for the transmission resource in the at least one time domain range and the at least one frequency domain range. The contention for the transmission resource may alternatively be described as contention for a channel access opportunity.

According to the foregoing method, a quantity of transmission resources that can be contended for and that are scheduled by the network device to the first terminal device is greater than a quantity of transmission resources required by the first terminal device. In this way, a success rate of obtaining the transmission resource through contention by the first terminal device can be increased.

In an optional implementation, at least one of the at least one time domain range may include at least two consecutive slots. In this way, compared with a solution in which the network device currently indicates that a slot is occupied by specific several transmission resources, a quantity of all transmission resources included in the at least two consecutive slots may also be greater than the quantity of transmission resources required by the first terminal device. This provides more opportunities for the first terminal device to obtain the transmission resource through contention.

In a first example, that the first DCI indicates the at least one time domain range may be implemented in the following five manners:

Manner a1: The first DCI indicates a time domain position in which a first PSFCH is located, the time domain position in which the first PSFCH is located corresponds to a plurality of slots, and all or some of the plurality of slots are a first time domain range, and the at least one time domain range includes the first time domain range.

That the first DCI indicates the time domain position in which the first PSFCH is located may be understood as that the first DCI is used to determine the time domain position of the first PSFCH.

That the time domain position in which the first PSFCH is located corresponds to the plurality of slots indicates that the first terminal device can perform data transmission in the plurality of slots, and transmission feedback during the data transmission in the plurality of slots may be fed back by using the time domain position in which the first PSFCH is located.

In a possible implementation, when the some of the plurality of slots are the first time domain range, a start position of the first time domain range may be a slot determined based on a slot in which the first DCI is located and a time gap (time gap) indicated by the first DCI, and an end position may be a last slot in the plurality of slots. For example, the slot determined based on the slot in which the first DCI is located and the time gap indicated by the first DCI may be a slot obtained by adding the slot in which the first DCI is located to the time gap indicated by the first DCI. Certainly, there may be another case. This is not limited in this application.

Optionally, in Manner a1, when the at least one time domain range is one time domain range, the first time domain range is the time domain range. When the at least one time domain range is a plurality of time domain ranges, the first DCI may indicate time domain positions in which the plurality of first PSFCHs are located, and further, a plurality of first time domain ranges may be determined, that is, the plurality of time domain ranges may be determined.

In an optional implementation, in Manner a1, the first terminal device may determine, based on the time domain position of the first PSFCH and a parameter sl-PSFCH-to-PUCCH, a time domain position in which the first terminal device sends PUCCH information to the network device. For example, the time domain position for sending the PUCCH information may be the time domain position of the first PSFCH plus a time gap indicated by the parameter sl-PSFCH-to-PUCCH.

Manner a2: The first DCI is used to determine a first time domain position and a first time gap, a range from a second time domain position to the first time domain position is a second time domain range, the at least one time domain range includes the second time domain range, and the second time domain position is a time domain position determined based on a slot in which the first DCI is located and the first time gap.

Optionally, the first DCI may directly indicate the first time domain position by using a parameter time domain resource assignment (time resource assignment), or the first DCI may indicate a third PSFCH by using a parameter time domain resource assignment (time resource assignment). Then, the first time domain position is determined based on the third PSFCH indicated by the first DCI. For example, the first time domain position may be a last slot in a plurality of slots corresponding to the third PSFCH.

The first time gap may be time indicated by a parameter time gap (time gap) in the first DCI.

When the second time domain position is determined based on the slot in which the first DCI is located and the first time gap, for example, a time domain position determined by adding the slot in which the first DCI is located to a first time gap may be used as the second time domain position. Certainly, the second time domain position may alternatively be determined based on the slot in which the first DCI is located and the first time gap in another method. This is not limited in this application.

Optionally, in Manner a2, when the at least one time domain range is one time domain range, the second time domain range is the time domain range. When the at least one time domain range is a plurality of time domain ranges, the first DCI may be used to determine a plurality of first time domain positions, and a plurality of second time domain positions may be determined based on the slot in which the first DCI is located and the first time gap. The plurality of determined first time domain positions one-to-one correspond to the plurality of determined second time domain positions, and a range from one second time domain position to a corresponding first time domain position is a second time domain range. Further, a plurality of second time domain ranges may be determined, that is, the plurality of time domain ranges may be determined. For example, when the plurality of second time domain positions may be determined based on the slot in which the first DCI is located and the first time gap, the time domain position obtained by adding the slot in which the first DCI is located to one first time gap may be used as a $1^{st}$ second time domain position. Then, a time domain position obtained by adding the slot in which the first DCI is located to k first time gaps is used as a second time domain position, and the plurality of second time domain positions are obtained by analogy, where k is an integer greater than or equal to 2. It should be understood that the foregoing example of determining the plurality of second time domain position is merely an example, and there may be a plurality of other methods. This is not limited in this application.

Manner a3: The first DCI indicates a third time domain position and a fourth time domain position, a range from the third time domain position to the fourth time domain position is a third time domain range, and the at least one time domain range includes the third time domain range.

Optionally, the first DCI may indicate the third time domain position and the fourth time domain position by using a parameter time domain resource assignment (time resource assignment). For example, the first DCI may indicate, by using the parameter time domain resource assignment (time resource assignment), time domain positions corresponding to three transmission resources, where two of the time domain positions corresponding to the three transmission resources may be used as the third time domain position and the fourth time domain position. For example, time domain positions corresponding to the last two transmission resources may be used as the third time domain position and the fourth time domain position. It should be understood that the foregoing method is merely an example, and there may be another method. This is not limited in this application.

In an optional implementation, the first DCI may indicate one third time domain position and one fourth time domain position. In this case, one third time domain range is obtained. Alternatively, the first DCI may indicate a plurality of third time domain positions and a plurality of fourth time domain positions, that is, indicate start positions and end positions of the plurality of time domain ranges, so that the plurality of third time domain ranges can be obtained.

Manner a4: The first DCI is used to determine N time domain positions, a start position of each of N time domain ranges is one of the N time domain positions, duration of each time domain range is first duration, the at least one time domain range includes the N time domain ranges, and N is an integer greater than or equal to 1.

Optionally, the N time domain positions may be determined by using a parameter time domain resource assignment (time resource assignment). The first duration may be preconfigured, predefined, or indicated by the first DCI. For example, the first DCI may indicate the first duration by using a parameter. Optionally, the parameter may be a parameter time gap (time gap) or another parameter. This is not limited in this application. When the first duration is preconfigured or predefined, the first DCI may reuse current DCI used by the network device to schedule the transmission resource for the first terminal device. When the first duration is indicated by the first DCI, compared with the current DCI, a function of indicating the first duration is added to the first DCI.

For example, it is assumed that the N time domain positions include three time domain positions n1, n2, and n3, and when the first duration is m slots, three time domain ranges may be from the time domain position n1 to a time domain position n1+m, the time domain position n2 to a time domain position n2+m, and the time domain position n3 to a time domain position n3+m. m may be an integer greater than or equal to 2.

It should be noted that the foregoing shows only an example method for determining the N time domain ranges based on the N time domain positions and the first duration. Alternatively, the N time domain ranges may be determined based on the N time domain positions and the first duration in another method. This is not limited in this application. For example, the foregoing assumption is still used. The three time domain ranges may be from the time domain position n1 to a time domain position n1+m-1, the time domain position n2 to a time domain position n2+m-1, and the time domain position n3 to a time domain position n3+m-1.

It should be noted that in the foregoing example, an example in which the first duration corresponding to the N time domain ranges is the same is merely used for description. It should be understood that in specific implementation, first duration corresponding to different time domain ranges may be the same or different, or may be partially the same and partially different. This is not limited in this application.

Optionally, in Manner a2 to Manner a4, the at least one time domain range indicated by the first DCI may correspond to slots in which one or more PSFCHs are located. When the at least one time domain range indicated by the first DCI corresponds to slots in which at least two PSFCHs (namely, the plurality of PSFCHs) are located, to ensure reliability of contention for access, when the first terminal device may determine, based on a PSFCH-to-HARQ feedback timing indicator (PSFCH-to-HARQ feedback timing indicator) in the first DCI, the time domain position in which the first terminal device sends the PUCCH information to the network device, the first terminal device may determine, based on slots in which a latest PSFCH corresponding to the at least one time domain range is located, the time domain position for sending the PUCCH information.

Manner a5: The first DCI indicates a first transmission resource, the first transmission resource corresponds to a second PSFCH, a plurality of slots corresponding to the second PSFCH are a fourth time domain range, and the at least one time domain range includes the fourth time domain range.

In Manner a5, when the first DCI indicates the first transmission resource, that is, the network device schedules the first transmission resource for the first terminal device, after the first transmission resource is preempted by another terminal device or the first transmission resource cannot be used, the first terminal device may preempt another transmission resource in the fourth time domain range. For example, as shown in FIG. 5, after the first transmission resource is preempted by the another terminal device, the transmission resource may be contended for in the plurality of slots (four slots are used as an example in the figure) corresponding to the second PSFCH corresponding to the first transmission resource.

Optionally, in Manner a5, when the first DCI indicates one first transmission resource, there is one fourth time domain range, that is, the at least one time domain range is one time domain range. When the first DCI indicates a plurality of first transmission resources, the plurality of first transmission resources may correspond to a plurality of second PSFCHs, so that a plurality of fourth time domain ranges can be determined, that is, the at least one time domain range is a plurality of time domain ranges.

In Manner a5, current signaling does not need to be changed. Instead, flexibility is provided when the first terminal device processes the current signaling, that is, the plurality of slots may be determined. In this case, a change to a current standard is small.

It should be noted that the foregoing five manners may be implemented independently, or may be implemented in combination, or a manner to be used may be determined based on a configuration. This is not limited in this application. For example, when Manner a3 and Manner a4 are combined, the first DCI may indicate the three time domain positions, and one time domain range may be determined based on one of the time domain positions and the first duration, and another time domain range is determined by using the remaining two time domain positions as a start time domain position and an end time domain position of the time domain range. Certainly, there may be other combination examples, which are not listed one by one in this application.

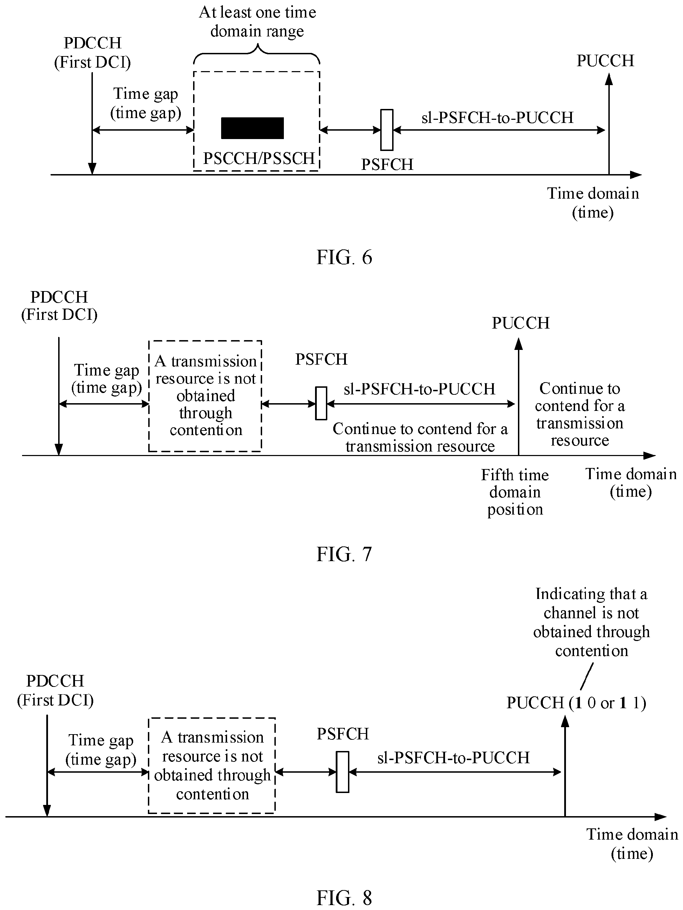

In the five manners in the first example, the first terminal device may determine the at least one time domain range by using the first DCI. Further, as shown in FIG. 6, the first terminal device may contend for the transmission resource in the at least one time domain range. In other words, the all transmission resources in the at least one time domain range may be used by the first terminal device to transmit a PSCCH or a PSSCH, so that the first terminal device determines, in the all transmission resources, whether the transmission resource required and available by the first terminal device exists.

In a current resource scheduling mode, a terminal device may determine a time domain position of a first transmission resource by using a parameter time gap (time gap) in DCI, and determine, by using a parameter time domain resource assignment (time resource assignment), time domain positions of two or three transmission resources reserved to be scheduled. Therefore, three or four time domain positions may be determined. However, in the foregoing five manners provided in embodiments of this application, the first DCI may indicate the at least one time domain range, that is, the at least one time domain range may be determined by using the first DCI, and the all slots in the at least one time domain range may be used by the first terminal device for the contention for access. The first time domain range is wider than a time domain range of the three or four time domain positions indicated in the conventional technology. Specifically, currently, only several specific scheduled transmission resources may be used, and the transmission resources that may be used in this application are the some transmission resources that may be contended for in the all transmission resources in the at least one indicated time range. For example, transmission resources in an $s^{th}$ slot, an $(s+3)^{th}$ slot, and an $(s+10)^{th}$ slot are indicated in the conventional technology, and transmission resources in an $s^{th}$ slot, an $(s+10)^{th}$ slot, and all slots between the $s^{th}$ slot and the $(s+10)^{th}$ slot may be indicated in this application. In other words, according to the method in this application, a transmission resource in an $(s+2)^{th}$ slot or the like may still be contended for. It is clear that this can increase a contention opportunity of the first terminal device.

In a second example, that the first DCI indicates the at least one frequency domain range may be implemented in the following two manners:

Manner b 1: The first DCI indicates a first frequency domain position and a second frequency domain position, a range from the first frequency domain position to the second frequency domain position is a first frequency domain range, and the at least one frequency domain range includes the first frequency domain range.

Optionally, the first DCI may indicate the first frequency domain position and the second frequency domain position by using a frequency domain resource indicator value (frequency resource indicator value, FRIV) in a parameter frequency domain resource assignment (frequency resource assignment). For example, a start frequency domain position of a first frequency domain resource may be determined by using a lowest index of subchannel allocation to initial transmission (Lowest index of the subchannel allocation to the initial transmission) field of the first DCI, a start frequency domain position of a second frequency domain resource may be determined by using a parameter $n_{subCH,1}^{start}$ indicating a start subchannel index for the second resource (denotes the starting sub-channel index for the second resource), a start frequency domain position of a third frequency domain resource is determined by using a parameter $n_{subCH,2}^{start}$ indicating a start subchannel index for the third resource (denotes the starting sub-channel index for the third resource), and then the first frequency domain position and the second frequency domain position are determined based on the three start frequency domain positions and/or a parameter $L_{subCH}$, where $L_{subCH}$ indicates a subchannel (subchannel, subCH) quantity, namely, an occupied frequency domain resource. For example, in a possible method, the start frequency domain position of the first frequency domain resource is used as the first frequency domain position, and a frequency domain position determined by $n_{subCH,1}^{start} + L_{subCH}$ is used as the second frequency domain position, to obtain the first frequency domain range. For another example, in still another possible method, the start frequency domain position of the first frequency domain resource is used as the first frequency domain position, and the start position of the second frequency domain resource is used as the second frequency domain position, to obtain the first frequency domain range. For another example, in another possible method, the start frequency domain position of the third frequency domain resource is used as the first frequency domain position, and a frequency domain position determined by

$\mathrm{n}^{\text{start}}_{\text{subCH,2}} + \mathrm{L}_{\text{subCH}}$ is used as the second frequency domain position, to obtain the first frequency domain range. Then, the first terminal device can contend for access on all frequency domain resources in the first frequency domain range. It should be understood that the foregoing method is merely an example, and there may be another method. This is not limited in this application.

In an optional implementation, the first DCI may indicate one first frequency domain position and one second frequency domain position. In this case, one first frequency domain range is obtained. Alternatively, the first DCI may indicate a plurality of first frequency domain positions and a plurality of second frequency domain positions, that is, indicate start positions and end positions of the plurality of frequency domain ranges, so that a plurality of first frequency domain ranges can be obtained.

Manner b2: The first DCI is used to determine M frequency domain positions, a start position of each of M frequency domain ranges is one of the M frequency domain positions, a continuous frequency bandwidth of each frequency domain range may be a first frequency bandwidth, the at least one frequency domain range includes the M frequency domain ranges, and M is an integer greater than or equal to 1.

Optionally, the M frequency domain positions may be determined by using a parameter frequency domain resource assignment (frequency resource assignment), for example, the three frequency start positions determined in Manner b 1.

The first frequency bandwidth may be preconfigured, predefined, or indicated by the first DCI.

It is assumed that the M frequency domain positions include start frequency domain positions of three frequency domain resources, and when the first frequency bandwidth is w physical resource blocks (physical resource block, PRB), three frequency domain ranges may respectively last for w PRBs starting from the start frequency domain position of the first frequency domain resource, last for w PRBs starting from the start frequency domain position of the second frequency domain resource, and last for w PRBs starting from the start frequency domain position of the third frequency domain resource.

It should be noted that the foregoing shows only an example method for determining the M frequency domain ranges based on the M frequency domain positions and the first frequency bandwidth. Alternatively, the M frequency domain ranges may be determined based on the M frequency domain positions and the first frequency bandwidth in another method. This is not limited in this application. For example, the foregoing assumption is still used. The M frequency domain positions include the start frequency domain positions of the three frequency domain resources, and the first frequency bandwidth is the w PRBs. Alternatively, the three frequency domain ranges may respectively last for w PRBs starting from the start frequency domain position of the first frequency domain resource and PRBs occupied by $\mathrm{L}_{\text{subCH}}$ subchannels, last for w PRBs starting from the start frequency domain position of the second frequency domain resource and PRBs occupied by $\mathrm{L}_{\text{subCH}}$ subchannels, and last for w PRBs starting from the start frequency domain position of the third frequency domain resource and PRBs occupied by $\mathrm{L}_{\text{subCH}}$ subchannels.

It should be noted that in the foregoing example, an example in which the first frequency bandwidth corresponding to the M frequency domain ranges is the same is merely used for description. It should be understood that in specific implementation, first frequency bandwidths corresponding to different frequency domain ranges may be the same or different, or may be partially the same and partially different. This is not limited in this application.

In the manner in the second example, compared with the conventional technology, a larger quantity of PRBs required by the first terminal device to carry data may be indicated, so that the success rate of obtaining the transmission resource through contention by the first terminal device can be improved.

The method in the first example may be independently implemented, the method in the second example may also be independently implemented, the method in the first example and the method in the second example may be implemented in combination, and the transmission resources whose quantity is larger than the quantity of transmission resources required by the first terminal device may be indicated in all the three cases. Therefore, the success rate of obtaining the transmission resource through contention by the first terminal device can be improved.

According to the foregoing method, when the first terminal device determines, in the all transmission resources in the at least one time domain range and/or the at least one frequency domain range, that the some transmission resources can be used by the first terminal device to transmit the data, it indicates that the first terminal device successfully obtains the transmission resource through contention, so that the first terminal device can transmit the data to a second terminal device by using the some transmission resources.

When the first terminal device determines that the some transmission resources used by the first terminal device to transmit the data do not exist in the all transmission resources in the at least one time domain range and/or the at least one frequency domain range, it indicates that the first terminal device fails to contend for the transmission resource, that is, the first terminal device fails to obtain the transmission resource through contention, that is, the first terminal device fails to obtain the channel through contention. As a result, the first terminal device cannot transmit the data to the second terminal device. In this case, the first terminal device may perform a subsequent procedure by using the following four methods:

Method c1: When the first terminal device determines that the some transmission resources used by the first terminal device to transmit the data do not exist in the all transmission resources in the at least one time domain range or in the at least one time domain range and the at least one frequency domain range, the first terminal device may send transmission failure information (namely, an NACK) to the network device by using a PUCCH corresponding to a PSFCH corresponding to the at least one time domain range.

In an optional implementation, when the at least one time domain range is a plurality of time domain ranges, when the first terminal device determines that the some transmission resources used by the first terminal device to transmit the data do not exist in the all transmission resources, the first terminal device may send the transmission failure information to the network device based on a time domain position in which a PSFCH corresponding to a last time domain range in the at least one time domain range is located. The first terminal device may send the transmission failure information to the network device based on the time domain position in which the PSFCH corresponding to the last time domain range in the at least one time domain range is located. To be specific, the first terminal device determines the PUCCH corresponding to the time domain position in which the PSFCH corresponding to the last time domain range in the at least one time domain range is located, and sends the transmission failure information to the network device in the determined time domain position of the PUCCH. In this way, the first terminal device can return the NACK only once, to indicate that the transmission resource is not obtained through contention in all previous time domain ranges, thereby reducing signaling overheads.

Method c2: When the first terminal device determines that the some transmission resources used by the first terminal device to transmit the data do not exist in the all transmission resources, the first terminal device may determine, in a first resource pool, the transmission resource used by the first terminal device to transmit the data, where the first resource pool includes a plurality of transmission resources used to transmit data.

The first terminal device may determine, in the first resource pool, the transmission resource used by the first terminal device to transmit the data. In other words, the first terminal device determines, in the first resource pool, whether the transmission resource used by the first terminal device to transmit the data exists.

According to Method c2, when the first terminal device fails to obtain, through contention, the transmission resource scheduled by the network device, the first terminal device may switch from a mode 1 (mode 1) to a mode 2 (mode 2) to perform resource selection, to improve the success rate of obtaining the transmission resource through contention by the first terminal device.

In an optional implementation, in Method c2, the first terminal device may send transmission success information (for example, an ACK) to the network device. In this way, when the first terminal device independently selects the transmission resource from the first resource pool, the network device can be prevented from rescheduling a transmission resource for the first terminal device.

In Method c2, it may be understood that the first terminal device continues to contend for the transmission resource beyond the time domain range and/or the frequency domain range indicated by the network device. Optionally, in a packet delay budget (packet delay budget, PDB), the first terminal device determines, in the first resource pool, the transmission resource used by the first terminal device to transmit the data. In other words, when the first terminal device continues to contend for the transmission resource beyond the time domain range and/or the frequency domain range indicated by the network device, a time range cannot exceed the PDB, thereby reducing a data delay.

In a possible manner, in Method c2, the first terminal device determines, in the first resource pool in a fifth time domain position, that the first transmission resource can be used by the first terminal device to transmit the data, and the fifth time domain position is a time domain position determined by the first terminal device for sending PUCCH information; and the first terminal device determines that a priority of sending the PUCCH information in the fifth time domain position is higher than a priority of sending the data in the fifth time domain position, or the first terminal device determines that a priority of sending the PUCCH information in the fifth time domain position is lower than a priority of sending the data in the fifth time domain position.

In other words, the first terminal device obtains the first transmission resource through contention in the fifth time domain position, that is, the first terminal device may transmit the data to the second terminal device in the fifth time domain position by using the first transmission resource, and the first terminal device may also send the PUCCH to the network device in the fifth time domain position. In this case, the first terminal device may finally determine, based on the priority of sending the PUCCH information in the fifth time domain position and the priority of sending the data in the fifth time domain position, to send the PUCCH information and/or send the data in the fifth time domain position. For example, when the priority of sending the PUCCH information by the first terminal device in the fifth time domain position is lower than the priority of sending the data in the fifth time domain position, the first terminal device transmits the data in the fifth time domain position. When the priority of sending the PUCCH information by the first terminal device in the fifth time domain position is higher than the priority of sending the data in the fifth time domain position, the first terminal device sends the PUCCH information in the fifth time domain position.

In an optional manner, in the fifth time domain position, if power control is not limited, the first terminal device can send both the PUCCH information and the data in the fifth time domain position.

In another optional implementation, in the fifth time domain position, if power is limited, the first terminal device may determine that the priority of sending the PUCCH information in the fifth time domain position is higher than the priority of sending the data in the fifth time domain position. In this case, the first terminal device may send the PUCCH information in the fifth time domain position, but does not send the data in the fifth time domain position. For example, as shown in FIG. 7, the first terminal device sends the PUCCH in the fifth time domain position, and continues to contend for the transmission resource after the fifth time domain position.

In another optional implementation, in the fifth time domain position, if power is limited, and therefore power is insufficient when the PUCCH information is sent, the first terminal device may reduce the power for sending the PUCCH information, to ensure that both the PUCCH information and the data are sent in the fifth time domain position.

In a possible example, in Method c2, when the first terminal device determines that the transmission resource used by the first terminal device to transmit the data does not exist in the first resource pool, or when the first terminal device determines that the transmission resource used by the first terminal device to transmit the data exists in the first resource pool and the first terminal device fails to transmit the data based on the determined transmission resource, the first terminal device sends a first scheduling request to the network device, where the first scheduling request is used to request the network device to reschedule a transmission resource for the first terminal device. In this case, when the first terminal device fails to independently select the transmission resource, or when the first terminal device succeeds in independently selecting the transmission resource but fails to transmit the data, the network device can continue to schedule the transmission resource for the first terminal device.

Optionally, when sending the first scheduling request to the network device, the first terminal device may send the first scheduling request in the PDB, to avoid exceeding a maximum data delay.

Optionally, when requesting the resource for data scheduling from the network device, the first terminal device may send information of the PDB to the network device.

Method c3: When the first terminal device determines that the some transmission resources used by the first terminal device to transmit the data do not exist in the all transmission resources, the first terminal device sends first information to the network device, where the first information indicates that the first terminal device determines that the some transmission resources used by the first terminal device to transmit the data do not exist in the all transmission resources.

Optionally, the first information may include a first bit, and the first information indicates, by using the first bit, that the first terminal device determines that the some transmission resources used by the first terminal device to transmit the data do not exist in the all transmission resources, that is, the first terminal device indicates, by using the first bit, that the first terminal device fails to obtain the transmission resource through contention. In a possible case, the first bit may indicate, by using different values, that the first terminal device fails to obtain the transmission resource through contention or obtains the transmission resource through contention. For example, when the first bit is 1, it may indicate that the first terminal device fails to obtain the transmission resource through contention, or when the first bit is 0, it may indicate that the first terminal device obtains the transmission resource through contention. For another example, when the first bit is 0, it may indicate that the first terminal device fails to obtain the transmission resource through contention, or when the first bit is 1, it may indicate that the first terminal device obtains the transmission resource through contention. This is not limited in this application. In still another possible case, whether the first bit is fed back may indicate whether the first terminal device obtains the transmission resource through contention, that is, when failing to obtain the transmission resource through contention, the first terminal device feeds back the first bit. A value of the first bit is not limited. When obtaining the transmission resource through contention, the first terminal device may not feed back the first bit.

Optionally, the first information may further include a second bit, and the first information indicates, by using the second bit, that the first terminal device fails to transmit the data or succeeds in transmitting the data. For example, when the second bit is 1, it may indicate that the first terminal device succeeds in transmitting the data, or when the second bit is 0, it may indicate that the first terminal device fails to transmit the data. For another example, when the second bit is 0, it may indicate that the first terminal device succeeds in transmitting the data, or when the second bit is 1, it may indicate that the first terminal device fails to transmit the data. This is not limited in this application.

It should be noted that, when the first bit indicates that the first terminal device fails to obtain the transmission resource through contention, a value of the second bit does not need to be processed (that is, the value of the second bit is not limited). In other words, when the first terminal device fails to obtain the transmission resource through contention, it indicates that the first terminal device does not succeed in transmitting the data. Further, there is no need for the feedback on a data transmission failure or success.

Optionally, the first information may be information carried by a PUCCH.

Any format (format) of the PUCCH information may support 2-bit (bit) information space. Therefore, the first terminal device may indicate, by using one bit, whether the transmission resource is obtained through contention (whether the channel is obtained through contention), and indicate, by using the other bit, whether the data is successfully transmitted.

For example, as shown in FIG. 8, one of the two bits in the PUCCH indicates whether the data is successfully transmitted, and the other bit indicates whether the channel is obtained through contention. For example, a first bit carries a channel contention result, that is, indicates whether the channel is obtained through contention, and a second bit carries a transmission result, that is, indicates whether the data is successfully transmitted. If the first bit indicates that the channel is not obtained through contention, it indicates that the data transmission of the first terminal device fails. Therefore, the second bit may be a default value or be set to 0. After receiving an indication indicating that the channel is not obtained through contention, the network device may avoid the channel when scheduling a transmission resource next time based on the indication, thereby reducing a case in which the channel cannot be obtained through contention.

Method c4: When the first terminal device determines that the some transmission resources used by the first terminal device to transmit the data do not exist in the all transmission resources, the first terminal device skips sending PUCCH information to the network device.

When the network device does not receive the PUCCH information sent by the first terminal device, the network device may understand that the first terminal device fails to obtain the transmission resource through contention. In this way, whether the first terminal device obtains the transmission resource through contention can be determined based on whether the first terminal device sends the PUCCH information.

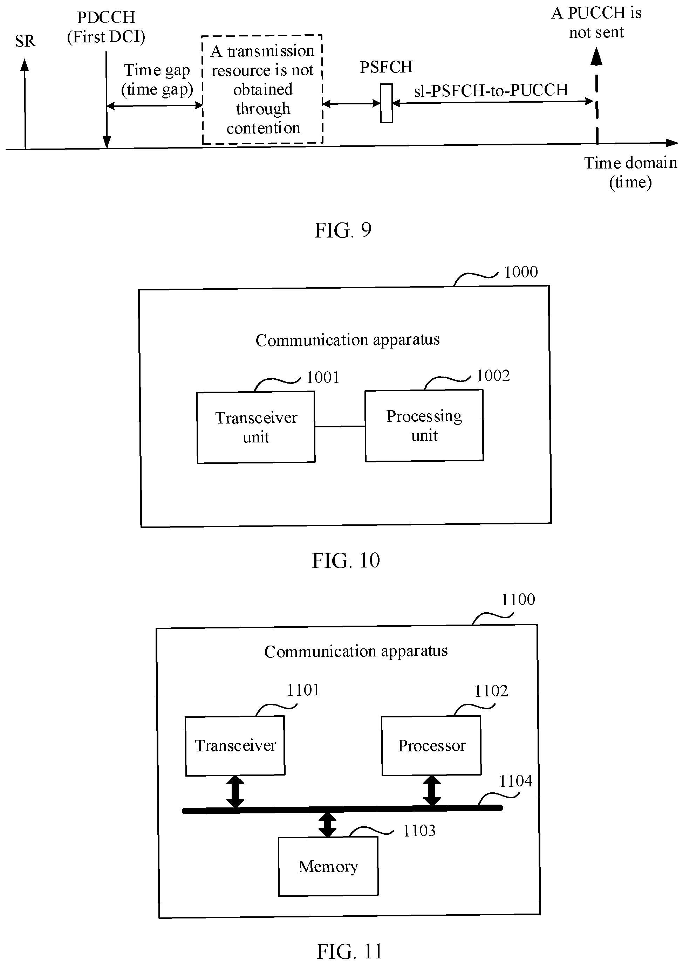

Optionally, when the first terminal device sends a scheduling request (scheduling request, SR) to the network device, and the network device schedules the transmission resource for the first terminal device, it may indicate that the first terminal device has a data transmission requirement. In this case, when the network device does not receive the PUCCH information sent by the first terminal device, the network device may understand that the first terminal device fails to obtain the transmission resource through contention. For example, as shown in FIG. 9, when the first terminal device sends the SR to the network device, after the network device schedules the transmission resource for the first terminal device, the first terminal device does not send the PUCCH information to the network device when failing to obtain the transmission resource through contention.

According to Method c1 to Method c4, a specific operation procedure of the first terminal device in a case in which the first terminal device fails to obtain the transmission resource through contention is clarified, so that the network device can learn that the first terminal device fails to obtain the transmission resource through contention, or the first terminal device can continue to contend for the transmission resource in another manner. Therefore, the opportunity for the first terminal device to obtain the transmission resource through contention is increased.

According to the communication method provided in embodiments of this application, the network device indicates the at least one time domain range and/or the at least one frequency domain range to the first terminal device, so that the first terminal device contends for a transmission resource in the transmission resources that are more than the transmission resources required by the first terminal device. In this way, redundant space is increased for the first terminal device to contend for the transmission resource, and the success rate of obtaining the transmission resource through contention by the first terminal device can be increased, thereby increasing a data transmission success rate.

Based on the foregoing embodiments, an embodiment of this application further provides a communication apparatus. Refer to FIG. 10. A communication apparatus 1000 may include a transceiver unit 1001 and a processing unit 1002. The transceiver unit 1001 is used by the communication apparatus 1000 to receive information (a message or data) or send information (a message or data), and the processing unit 1002 is configured to control and manage an action of the communication apparatus 1000. The processing unit 1002 may further control steps performed by the transceiver unit 1001.

For example, the communication apparatus 1000 may be specifically the network device in the foregoing embodiments, or a processor, a chip, a chip system, a functional module, or the like in the network device. Alternatively, the communication apparatus 1000 may be specifically the first terminal device in the foregoing embodiments, or a processor, a chip, a chip system, a functional module, or the like in the first terminal device.

In an embodiment, when the communication apparatus 1000 is configured to implement the functions of the first terminal device in the embodiment shown in FIG. 4, the following may be specifically included: The transceiver unit 1001 is configured to receive first downlink control information DCI from a network device, where the first DCI indicates at least one time domain range and/or at least one frequency domain range; and the processing unit 1002 is configured to: determine the at least one time domain range and/or the at least one frequency domain range based on the first DCI; and determine, in all transmission resources in the at least one time domain range and/or the at least one frequency domain range, whether some transmission resources can be used by the first terminal device to transmit data.

In an example, that the first DCI indicates the at least one time domain range may include: The first DCI indicates a time domain position in which a first physical sidelink feedback channel PSFCH is located, the time domain position of the first PSFCH corresponds to a plurality of slots, and all or some of the plurality of slots is a first time domain range, and the at least one time domain range includes the first time domain range.

In another example, that the first DCI indicates the at least one time domain range may include: The first DCI is used to determine a first time domain position and a first time gap, a range from a second time domain position to the first time domain position is a second time domain range, the at least one time domain range includes the second time domain range, and the second time domain position is a time domain position determined based on a slot in which the first DCI is located and the first time gap.

In still another example, that the first DCI indicates the at least one time domain range may include: The first DCI indicates a third time domain position and a fourth time domain position, a range from the third time domain position to the fourth time domain position is a third time domain range, and the at least one time domain range includes the third time domain range.

In still another example, that the first DCI indicates the at least one time domain range may include: The first DCI is used to determine N time domain positions, a start position of each of N time domain ranges is one of the N time domain positions, duration of each time domain range is first duration, the at least one time domain range includes the N time domain ranges, and N is an integer greater than or equal to 1.

In still another example, that the first DCI indicates the at least one time domain range may include: The first DCI indicates a first transmission resource, the first transmission resource corresponds to a second PSFCH, a plurality of slots corresponding to the second PSFCH are a fourth time domain range, and the at least one time domain range includes the fourth time domain range.

In an optional implementation, that the first DCI indicates the at least one frequency domain range may include: The first DCI indicates a first frequency domain position and a second frequency domain position, a range from the first frequency domain position to the second frequency domain position is a first frequency domain range, and the at least one frequency domain range includes the first frequency domain range.

In another optional implementation, that the first DCI indicates the at least one frequency domain range may include: The first DCI is used to determine M frequency domain positions, a start position of each of M frequency domain ranges is one of the M frequency domain positions, a continuous frequency bandwidth of each frequency domain range is a first frequency bandwidth, the at least one frequency domain range includes the M frequency domain ranges, and M is an integer greater than or equal to 1.

Optionally, when the at least one time domain range is a plurality of time domain ranges, the processing unit 1002 may be configured to determine that the some transmission resources used by the first terminal device to transmit the data do not exist in the all transmission resources, and further, the transceiver unit 1001 may be further configured to: when the processing unit 1002 determines that the some transmission resources used by the first terminal device to transmit the data do not exist in the all transmission resources, send transmission failure information to the network device based on a time domain position in which a PSFCH corresponding to a last time domain range in the at least one time domain range is located.

In a possible manner, the processing unit 1002 may be further configured to: when determining that the some transmission resources used by the first terminal device to transmit the data do not exist in the all transmission resources, determine, in a first resource pool, the transmission resource used by the first terminal device to transmit the data, where the first resource pool includes a plurality of transmission resources used to transmit data.

For example, the transceiver unit 1001 may be further configured to send transmission success information to the network device.

For example, when determining, in the first resource pool, the transmission resource used by the first terminal device to transmit the data, the processing unit 1002 may be configured to determine, in the first resource pool in a packet delay budget PDB, the transmission resource used by the first terminal device to transmit the data.

Optionally, the processing unit 1002 may be further configured to: determine, in the first resource pool in a fifth time domain position, that the first transmission resource can be used by the first terminal device to transmit the data, and the fifth time domain position is a time domain position determined by the first terminal device for sending physical uplink control channel PUCCH information; and determine that a priority of sending the PUCCH information in the fifth time domain position is higher than a priority of sending the data in the fifth time domain position.

In an optional implementation, the processing unit 1002 may be configured to determine that the transmission resource used by the first terminal device to transmit the data does not exist in the first resource pool; and the transceiver unit 1001 may be further configured to: when the processing unit 1002 determines that the transmission resource used by the first terminal device to transmit the data does not exist in the first resource pool, send a first scheduling request to the network device, where the first scheduling request is used to request the network device to reschedule a transmission resource for the first terminal device.

In an example implementation, the processing unit 1002 may be configured to determine that the some transmission resources used by the first terminal device to transmit the data do not exist in the all transmission resources, and the transceiver unit 1001 may be further configured to: when the processing unit 1002 determines that the some transmission resources used by the first terminal device to transmit the data do not exist in the all transmission resources, send first information to the network device, where the first information indicates that it is determined that the some transmission resources used by the first terminal device to transmit the data do not exist in the all transmission resources.

Optionally, the first information may include a first bit, and the first information indicates, by using the first bit, that it is determined that the some transmission resources used by the first terminal device to transmit the data do not exist in the all transmission resources.

In an optional implementation, the processing unit 1002 may be configured to determine that the some transmission resources used by the first terminal device to transmit the data do not exist in the all transmission resources; and the transceiver unit 1001 may be further configured to: when the processing unit 1002 determines that the some transmission resources used by the first terminal device to transmit the data do not exist in the all transmission resources, skip sending PUCCH information to the network device.

In another embodiment, when the communication apparatus 1000 is configured to implement the functions of the network device in the embodiment shown in FIG. 4, the following may be specifically included: The processing unit 1002 may be configured to determine first downlink control information DCI, where the first DCI indicates at least one time domain range and/or at least one frequency domain range, some transmission resources in all transmission resources in the at least one time domain range and/or the at least one frequency domain range are used by a first terminal device to determine whether the transmission resources can be used by the first terminal device to transmit data; and the transceiver unit 1001 may be configured to send the first DCI to the first terminal device.

In an example, that the first DCI indicates the at least one time domain range may include: The first DCI indicates a time domain position in which a first physical sidelink feedback channel PSFCH is located, the time domain position of the first PSFCH corresponds to a plurality of slots, and all or some of the plurality of slots is a first time domain range, and the at least one time domain range includes the first time domain range.

In another example, that the first DCI indicates the at least one time domain range may include: The first DCI is used to determine a first time domain position and a first time gap, a range from a second time domain position to the first time domain position is a second time domain range, the at least one time domain range includes the second time domain range, and the second time domain position is a time domain position determined based on a slot in which the first DCI is located and the first time gap.

In still another example, that the first DCI indicates the at least one time domain range may include: The first DCI indicates a third time domain position and a fourth time domain position, a range from the third time domain position to the fourth time domain position is a third time domain range, and the at least one time domain range includes the third time domain range.

In still another example, that the first DCI indicates the at least one time domain range may include: The first DCI is used to determine N time domain positions, a start position of each of N time domain ranges is one of the N time domain positions, duration of each time domain range is first duration, the at least one time domain range includes the N time domain ranges, and N is an integer greater than or equal to 1.

In still another example, that the first DCI indicates the at least one time domain range may include: The first DCI indicates a first transmission resource, the first transmission resource corresponds to a second PSFCH, a plurality of slots corresponding to the second PSFCH are a fourth time domain range, and the at least one time domain range includes the fourth time domain range.

In an optional implementation, that the first DCI indicates the at least one frequency domain range may include: The first DCI indicates a first frequency domain position and a second frequency domain position, a range from the first frequency domain position to the second frequency domain position is a first frequency domain range, and the at least one frequency domain range includes the first frequency domain range.

In another optional implementation, that the first DCI indicates the at least one frequency domain range may include: The first DCI is used to determine M frequency domain positions, a start position of each of M frequency domain ranges is one of the M frequency domain positions, a continuous frequency bandwidth of each frequency domain range is a first frequency bandwidth, the at least one frequency domain range includes the M frequency domain ranges, and M is an integer greater than or equal to 1.

Optionally, when the at least one time domain range is a plurality of time domain ranges, the transceiver unit 1001 may be further configured to receive transmission failure information from the first terminal device based on a time domain position in which a PSFCH corresponding to a last time domain range in the at least one time domain range is located, where the transmission failure information is sent by the first terminal device when the first terminal device determines that the some transmission resources used by the first terminal device to transmit the data do not exist in the all transmission resources.

For example, the transceiver unit 1001 may be configured to receive first information from the first terminal device, where the first information indicates that the first terminal device determines that the some transmission resources used by the first terminal device to transmit the data do not exist in the all transmission resources.

For example, the first information may include a first bit, and the first information indicates, by using the first bit, that the first terminal device determines that the some transmission resources used by the first terminal device to transmit the data do not exist in the all transmission resources.

It should be noted that, in embodiments of this application, division into the units is an example, and is merely logical function division, and may be other division in an actual implementation. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium, and includes several instructions for instructing a computer device (which may be a personal computer, a server, or a network device) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. Refer to FIG. 11. A communication apparatus 1100 may include a transceiver 1101 and a processor 1102. Optionally, the communication apparatus 1100 may further include a memory 1103. The memory 1103 may be disposed inside the communication apparatus 1100, or may be disposed outside the communication apparatus 1100. The processor 1102 may control the transceiver 1101 to receive and send information, a message, data, or the like.

Specifically, the processor 1102 may be a central processing unit (central processing unit, CPU), a network processor (network processor, NP), or a combination of a CPU and an NP. The processor 1102 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The transceiver 1101, the processor 1102, and the memory 1103 are connected to each other. Optionally, the transceiver 1101, the processor 1102, and the memory 1103 are connected to each other through a bus 1104. The bus 1104 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 11, but this does not mean that there is only one bus or only one type of bus.

In an optional implementation, the memory 1103 is configured to store a program and the like. Specifically, the program may include program code, and the program code includes computer operation instructions. The memory 1103 may include a RAM, and may further include a nonvolatile memory (nonvolatile memory), for example, one or more disk memories. The processor 1102 executes the application stored in the memory 1103, to implement the foregoing functions, thereby implementing functions of the communication apparatus 1100.

For example, the communication apparatus 1100 may be the network device in the foregoing embodiments, or may be the first terminal device in the foregoing embodiments.

In an embodiment, when the communication apparatus 1100 implements the functions of the first terminal device in the embodiment shown in FIG. 4, the transceiver 1101 may implement receiving and sending operations performed by the first terminal device in the embodiment shown in FIG. 4; and the processor 1102 may implement an operation other than the receiving and sending operations performed by the first terminal device in the embodiment shown in FIG. 4. Specifically, for related specific descriptions, refer to the related descriptions in the embodiment shown in FIG. 4. Details are not described herein again.

In an embodiment, when the communication apparatus 1100 implements the functions of the network device in the embodiment shown in FIG. 4, the transceiver 1101 may implement receiving and sending operations performed by the network device in the embodiment shown in FIG. 4; and the processor 1102 may implement an operation other than the receiving and sending operations performed by the network device in the embodiment shown in FIG. 4. Specifically, for related specific descriptions, refer to the related descriptions in the embodiment shown in FIG. 4. Details are not described herein again.

With reference to the foregoing description, this application provides the following embodiments. Numbers of the following embodiments do not necessarily need to comply with a sequence of numbers of the foregoing embodiments.

Embodiment 1: A communication method is provided, where the method includes:

A first terminal device receives first downlink control information DCI from a network device, where the first DCI indicates at least one time domain range and/or at least one frequency domain range; the first terminal device determines the at least one time domain range and/or the at least one frequency domain range based on the first DCI; and the first terminal device determines, in all transmission resources in the at least one time domain range and/or the at least one frequency domain range, whether some transmission resources can be used by the first terminal device to transmit data.

Embodiment 2: In the method according to Embodiment 1, that the first DCI indicates the at least one time domain range includes:

The first DCI indicates a time domain position in which a first physical sidelink feedback channel PSFCH is located, the time domain position of the first PSFCH corresponds to a plurality of slots, and all or some of the plurality of slots are a first time domain range, and the at least one time domain range includes the first time domain range.

Embodiment 3: In the method according to Embodiment 1, that the first DCI indicates the at least one time domain range includes:

The first DCI is used to determine a first time domain position and a first time gap, a range from a second time domain position to the first time domain position is a second time domain range, the at least one time domain range includes the second time domain range, and the second time domain position is a time domain position determined based on a slot in which the first DCI is located and the first time gap.

Embodiment 4: In the method according to Embodiment 1, that the first DCI indicates the at least one time domain range includes:

The first DCI indicates a third time domain position and a fourth time domain position, a range from the third time domain position to the fourth time domain position is a third time domain range, and the at least one time domain range includes the third time domain range.

Embodiment 5: In the method according to Embodiment 1, that the first DCI indicates the at least one time domain range includes:

The first DCI is used to determine N time domain positions, a start position of each of N time domain ranges is one of the N time domain positions, duration of each time domain range is first duration, the at least one time domain range includes the N time domain ranges, and N is an integer greater than or equal to 1.

Embodiment 6: In the method according to Embodiment 1, that the first DCI indicates the at least one time domain range includes:

The first DCI indicates a first transmission resource, the first transmission resource corresponds to a second PSFCH, a plurality of slots corresponding to the second PSFCH are a fourth time domain range, and the at least one time domain range includes the fourth time domain range.

Embodiment 7: In the method according to any one of Embodiments 1 to 6, that the first DCI indicates the at least one frequency domain range includes:

The first DCI indicates a first frequency domain position and a second frequency domain position, a range from the first frequency domain position to the second frequency domain position is a first frequency domain range, and the at least one frequency domain range includes the first frequency domain range.

Embodiment 8: In the method according to any one of Embodiments 1 to 6, that the first DCI indicates the at least one frequency domain range includes:

The first DCI is used to determine M frequency domain positions, a start position of each of M frequency domain ranges is one of the M frequency domain positions, a continuous frequency bandwidth of each frequency domain range is a first frequency bandwidth, the at least one frequency domain range includes the M frequency domain ranges, and M is an integer greater than or equal to 1.

Embodiment 9: In the method according to any one of Embodiments 1 to 8, when the at least one time domain range is a plurality of time domain ranges, the method further includes:

When the first terminal device determines that the some transmission resources used by the first terminal device to transmit the data do not exist in the all transmission resources, the first terminal device sends transmission failure information to the network device based on a time domain position in which a PSFCH corresponding to a last time domain range in the at least one time domain range is located.

Embodiment 10: In the method according to any one of Embodiments 1 to 8, when the first terminal device determines that the some transmission resources used by the first terminal device to transmit the data do not exist in the all transmission resources, the method further includes:

The first terminal device determines, in a first resource pool, the transmission resource used by the first terminal device to transmit the data, where the first resource pool includes a plurality of transmission resources used to transmit data.

Embodiment 11: In the method according to Embodiment 10, the method further includes:

The first terminal device sends transmission success information to the network device.

Embodiment 12: In the method according to Embodiment 10 or 11, that the first terminal device determines, in a first resource pool, the transmission resource used by the first terminal device to transmit the data includes:

The first terminal device determines, in the first resource pool in a packet delay budget PDB, the transmission resource used by the first terminal device to transmit the data.

Embodiment 13: In the method according to any one of Embodiments 10 to 12, the method further includes:

The first terminal device determines, in the first resource pool in a fifth time domain position, that the first transmission resource can be used by the first terminal device to transmit the data, and the fifth time domain position is a time domain position determined by the first terminal device for sending physical uplink control channel PUCCH information; and the first terminal device determines that a priority of sending the PUCCH information in the fifth time domain position is higher than a priority of sending the data in the fifth time domain position.

Embodiment 14: In the method according to any one of Embodiments 10 to 13, when the first terminal device determines that the transmission resource used by the first terminal device to transmit the data does not exist in the first resource pool, the method further includes:
The first terminal device sends a first scheduling request to the network device, where the first scheduling request is used to request the network device to reschedule a transmission resource for the first terminal device.

Embodiment 15: In the method according to any one of Embodiments 1 to 8, when the first terminal device determines that the some transmission resources used by the first terminal device to transmit the data do not exist in the all transmission resources, the method further includes:
The first terminal device sends first information to the network device, where the first information indicates that the first terminal device determines that the some transmission resources used by the first terminal device to transmit the data do not exist in the all transmission resources.

Embodiment 16: In the method according to Embodiment 15, the first information includes a first bit, and the first information indicates, by using the first bit, that the first terminal device determines that the some transmission resources used by the first terminal device to transmit the data do not exist in the all transmission resources.

Embodiment 17: In the method according to any one of Embodiments 1 to 8, when the first terminal device determines that the some transmission resources used by the first terminal device to transmit the data do not exist in the all transmission resources, the method further includes:
The first terminal device skips sending PUCCH information to the network device.

Embodiment 18: A communication method is provided, where the method includes:

A network device determines first downlink control information DCI, where the first DCI indicates at least one time domain range and/or at least one frequency domain range, some transmission resources in all transmission resources in the at least one time domain range and/or the at least one frequency domain range are used by a first terminal device to determine whether the transmission resources can be used by the first terminal device to transmit data; and
the network device sends the first DCI to the first terminal device.

Embodiment 19: In the method according to Embodiment 18, that the first DCI indicates the at least one time domain range includes:
The first DCI indicates a time domain position in which a first physical sidelink feedback channel PSFCH is located, the time domain position of the first PSFCH corresponds to a plurality of slots, and all or some of the plurality of slots are a first time domain range, and the at least one time domain range includes the first time domain range.

Embodiment 20: In the method according to Embodiment 18, that the first DCI indicates the at least one time domain range includes:
The first DCI is used to determine a first time domain position and a first time gap, a range from a second time domain position to the first time domain position is a second time domain range, the at least one time domain range includes the second time domain range, and the second time domain position is a time domain position determined based on a slot in which the first DCI is located and the first time gap.

Embodiment 21: In the method according to Embodiment 18, that the first DCI indicates the at least one time domain range includes:
The first DCI indicates a third time domain position and a fourth time domain position, a range from the third time domain position to the fourth time domain position is a third time domain range, and the at least one time domain range includes the third time domain range.

Embodiment 22: In the method according to Embodiment 18, that the first DCI indicates the at least one time domain range includes:
The first DCI is used to determine N time domain positions, a start position of each of N time domain ranges is one of the N time domain positions, duration of each time domain range is first duration, the at least one time domain range includes the N time domain ranges, and N is an integer greater than or equal to 1.

Embodiment 23: In the method according to Embodiment 18, that the first DCI indicates the at least one time domain range includes:
The first DCI indicates a first transmission resource, the first transmission resource corresponds to a second PSFCH, a plurality of slots corresponding to the second PSFCH are a fourth time domain range, and the at least one time domain range includes the fourth time domain range.

Embodiment 24: In the method according to any one of Embodiments 18 to 23, that the first DCI indicates the at least one frequency domain range includes:

The first DCI indicates a first frequency domain position and a second frequency domain position, a range from the first frequency domain position to the second frequency domain position is a first frequency domain range, and the at least one frequency domain range includes the first frequency domain range.

Embodiment 25: In the method according to any one of Embodiments 18 to 23, that the first DCI indicates the at least one frequency domain range includes:

The first DCI is used to determine M frequency domain positions, a start position of each of M frequency domain ranges is one of the M frequency domain positions, a continuous frequency bandwidth of each frequency domain range is a first frequency bandwidth, the at least one frequency domain range includes the M frequency domain ranges, and M is an integer greater than or equal to 1.

Embodiment 26: In the method according to any one of Embodiments 18 to 25, when the at least one time domain range is a plurality of time domain ranges, the method further includes:

The network device receives transmission failure information from the first terminal device based on a time domain position in which a PSFCH corresponding to a last time domain range in the at least one time domain range is located, where the transmission failure information is sent by the first terminal device when the first terminal device determines that the some transmission resources used by the first terminal device to transmit the data do not exist in the all transmission resources.

Embodiment 27: In the method according to any one of Embodiments 18 to 25, the method further includes:

The network device receives first information from the first terminal device, where the first information indicates that the first terminal device determines that the some transmission resources used by the first terminal device to transmit the data do not exist in the all transmission resources.

Embodiment 28: In the method according to Embodiment 27, the first information includes a first bit, and the first information indicates, by using the first bit, that the first terminal device determines that the some transmission resources used by the first terminal device to transmit the data do not exist in the all transmission resources.

Embodiment 29: A communication apparatus is provided, where the apparatus includes:

a transceiver unit, configured to receive first downlink control information DCI from a network device, where the first DCI indicates at least one time domain range and/or at least one frequency domain range; and
a processing unit, configured to: determine the at least one time domain range and/or the at least one frequency domain range based on the first DCI; and determine, in all transmission resources in the at least one time domain range and/or the at least one frequency domain range, whether some transmission resources can be used by a first terminal device to transmit data.

Embodiment 30: In the apparatus according to Embodiment 29, that the first DCI indicates the at least one time domain range includes:

The first DCI indicates a time domain position in which a first physical sidelink feedback channel PSFCH is located, the time domain position of the first PSFCH corresponds to a plurality of slots, and all or some of the plurality of slots are a first time domain range, and the at least one time domain range includes the first time domain range.

Embodiment 31: In the apparatus according to Embodiment 29, that the first DCI indicates the at least one time domain range includes:

The first DCI is used to determine a first time domain position and a first time gap, a range from a second time domain position to the first time domain position is a second time domain range, the at least one time domain range includes the second time domain range, and the second time domain position is a time domain position determined based on a slot in which the first DCI is located and the first time gap.

Embodiment 32: In the apparatus according to Embodiment 29, that the first DCI indicates the at least one time domain range includes:

The first DCI indicates a third time domain position and a fourth time domain position, a range from the third time domain position to the fourth time domain position is a third time domain range, and the at least one time domain range includes the third time domain range.

Embodiment 33: In the apparatus according to Embodiment 29, that the first DCI indicates the at least one time domain range includes:

The first DCI is used to determine N time domain positions, a start position of each of N time domain ranges is one of the N time domain positions, duration of each time domain range is first duration, the at least one time domain range includes the N time domain ranges, and N is an integer greater than or equal to 1.

Embodiment 34: In the apparatus according to Embodiment 29, that the first DCI indicates the at least one time domain range includes:

The first DCI indicates a first transmission resource, the first transmission resource corresponds to a second PSFCH, a plurality of slots corresponding to the second PSFCH are a fourth time domain range, and the at least one time domain range includes the fourth time domain range.

Embodiment 35: In the apparatus according to any one of Embodiments 29 to 34, that the first DCI indicates the at least one frequency domain range includes:

The first DCI indicates a first frequency domain position and a second frequency domain position, a range from the first frequency domain position to the second frequency domain position is a first frequency domain range, and the at least one frequency domain range includes the first frequency domain range.

Embodiment 36: In the apparatus according to any one of Embodiments 29 to 34, that the first DCI indicates the at least one frequency domain range includes:

The first DCI is used to determine M frequency domain positions, a start position of each of M frequency domain ranges is one of the M frequency domain positions, a continuous frequency bandwidth of each frequency domain range is a first frequency bandwidth, the at least one frequency domain range includes the M frequency domain ranges, and M is an integer greater than or equal to 1.

Embodiment 37: In the apparatus according to any one of Embodiments 29 to 36, when the at least one time domain range is a plurality of time domain ranges, the transceiver unit is further configured to:

when the processing unit determines that the some transmission resources used by the first terminal device to transmit the data do not exist in the all transmission resources, send transmission failure information to the network device based on a time domain position in which a PSFCH corresponding to a last time domain range in the at least one time domain range is located.

Embodiment 38: In the apparatus according to any one of Embodiments 29 to 36, the processing unit is further configured to:

when determining that the some transmission resources used by the first terminal device to transmit the data do not exist in the all transmission resources, determine, in a first resource pool, the transmission resource used by the first terminal device to transmit the data, where the first resource pool includes a plurality of transmission resources used to transmit data.

Embodiment 39: In the apparatus according to Embodiment 38, the transceiver unit is further configured to:

send transmission success information to the network device.

Embodiment 40: In the apparatus according to Embodiment 38 or 39, when determining, in the first resource pool, the transmission resource used by the first terminal device to transmit the data, the processing unit is specifically configured to:

determine, in the first resource pool in a packet delay budget PDB, the transmission resource used by the first terminal device to transmit the data.

Embodiment 41: In the apparatus according to any one of Embodiments 38 to 40, the processing unit is further configured to:

determine, in the first resource pool in a fifth time domain position, that the first transmission resource can be used by the first terminal device to transmit the data, and the fifth time domain position is a time domain position determined by the first terminal device for sending physical uplink control channel PUCCH information; and

determine that a priority of sending the PUCCH information in the fifth time domain position is higher than a priority of sending the data in the fifth time domain position.

Embodiment 42: In the apparatus according to any one of Embodiments 38 to 41, the transceiver unit is further configured to:

when the processing unit determines that the transmission resource used by the first terminal device to transmit the data does not exist in the first resource pool, send a first scheduling request to the network device, where the first scheduling request is used to request the network device to reschedule a transmission resource for the first terminal device.

Embodiment 43: In the apparatus according to any one of Embodiments 29 to 36, the transceiver unit is further configured to:

when the processing unit determines that the some transmission resources used by the first terminal device to transmit the data do not exist in the all transmission resources, send first information to the network device, where the first information indicates that the first terminal device determines that the some transmission resources used by the first terminal device to transmit the data do not exist in the all transmission resources.

Embodiment 44: In the apparatus according to Embodiment 43, the first information includes a first bit, and the first information indicates, by using the first bit, that the first terminal device determines that the some transmission resources used by the first terminal device to transmit the data do not exist in the all transmission resources.

Embodiment 45: In the apparatus according to any one of Embodiments 29 to 36, the transceiver unit is further configured to:

when the processing unit determines that the some transmission resources used by the first terminal device to transmit the data do not exist in the all transmission resources, skip sending PUCCH information to the network device.

Embodiment 46: A communication apparatus is provided, where the apparatus includes:

a processing unit, configured to determine first downlink control information DCI, where the first DCI indicates at least one time domain range and/or at least one frequency domain range, some transmission resources in all transmission resources in the at least one time domain range and/or the at least one frequency domain range are used by a first terminal device to determine whether the transmission resources can be used by the first terminal device to transmit data; and
a transceiver unit, configured to send the first DCI to the first terminal device.

Embodiment 47: In the apparatus according to Embodiment 46, that the first DCI indicates the at least one time domain range includes:

The first DCI indicates a time domain position in which a first physical sidelink feedback channel PSFCH is located, the time domain position of the first PSFCH corresponds to a plurality of slots, and all or some of the plurality of slots are a first time domain range, and the at least one time domain range includes the first time domain range.

Embodiment 48: In the apparatus according to Embodiment 46, that the first DCI indicates the at least one time domain range includes:

The first DCI is used to determine a first time domain position and a first time gap, a range from a second time domain position to the first time domain position is a second time domain range, the at least one time domain range includes the second time domain range, and the second time domain position is a time domain position determined based on a slot in which the first DCI is located and the first time gap.

Embodiment 49: In the apparatus according to Embodiment 46, that the first DCI indicates the at least one time domain range includes:

The first DCI indicates a third time domain position and a fourth time domain position, a range from the third time domain position to the fourth time domain position is a third time domain range, and the at least one time domain range includes the third time domain range.

Embodiment 50: In the apparatus according to Embodiment 46, that the first DCI indicates the at least one time domain range includes:

The first DCI is used to determine N time domain positions, a start position of each of N time domain ranges is one of the N time domain positions, duration of each time domain range is first duration, the at least one time domain range includes the N time domain ranges, and N is an integer greater than or equal to 1.

Embodiment 51: In the apparatus according to Embodiment 46, that the first DCI indicates the at least one time domain range includes:

The first DCI indicates a first transmission resource, the first transmission resource corresponds to a second PSFCH, a plurality of slots corresponding to the second PSFCH are a fourth time domain range, and the at least one time domain range includes the fourth time domain range.

Embodiment 52: In the apparatus according to any one of Embodiments 46 to 51, that the first DCI indicates the at least one frequency domain range includes:

The first DCI indicates a first frequency domain position and a second frequency domain position, a range from the first frequency domain position to the second frequency domain position is a first frequency domain range, and the at least one frequency domain range includes the first frequency domain range.

Embodiment 53: In the apparatus according to any one of Embodiments 46 to 51, that the first DCI indicates the at least one frequency domain range includes:

The first DCI is used to determine M frequency domain positions, a start position of each of M frequency domain ranges is one of the M frequency domain positions, a continuous frequency bandwidth of each frequency domain range is a first frequency bandwidth, the at least one frequency domain range includes the M frequency domain ranges, and M is an integer greater than or equal to 1.

Embodiment 54: In the apparatus according to any one of Embodiments 46 to 53, when the at least one time domain range is a plurality of time domain ranges, the transceiver unit is further configured to:

receive transmission failure information from the first terminal device based on a time domain position in which a PSFCH corresponding to a last time domain range in the at least one time domain range is located, where the transmission failure information is sent by the first terminal device when the first terminal device determines that the some transmission resources used by the first terminal device to transmit the data do not exist in the all transmission resources.

Embodiment 55: In the apparatus according to any one of Embodiments 46 to 53, the transceiver unit is further configured to:

receive first information from the first terminal device, where the first information indicates that the first terminal device determines that the some transmission resources used by the first terminal device to transmit the data do not exist in the all transmission resources.

Embodiment 56: In the apparatus according to Embodiment 55, the first information includes a first bit, and the first information indicates, by using the first bit, that the first terminal device determines that the some transmission resources used by the first terminal device to transmit the data do not exist in the all transmission resources.

Embodiment 57: A communication apparatus is provided, including a memory, a processor, and a transceiver, where

the memory is configured to store computer instructions;
the transceiver is configured to receive and send a message; and
the processor is coupled to the memory, and is configured to invoke the computer instructions in the memory, to perform the method according to any one of Embodiments 1 to 17 through the transceiver.

Embodiment 58: A communication apparatus is provided, including a memory, a processor, and a transceiver, where

the memory is configured to store computer instructions;
the transceiver is configured to receive and send a message; and
the processor is coupled to the memory, and is configured to invoke the computer instructions in the memory, to perform the method according to any one of Embodiments 18 to 28 through the transceiver.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

Based on the foregoing embodiments, an embodiment of this application provides a communication system. The communication system may include the first terminal device, the network device, and the like in the foregoing embodiments.

An embodiment of this application further provides a computer-readable storage medium. The computer-readable storage medium is configured to store a computer program. When the computer program is executed by a computer, the computer may implement the communication method provided in the foregoing method embodiments.

An embodiment of this application further provides a computer program product. The computer program product is configured to store a computer program. When the computer program is executed by a computer, the computer may implement the communication method provided in the foregoing method embodiments.

An embodiment of this application further provides a chip, including a processor. The processor is coupled to a memory, and is configured to invoke a program in the memory, so that the chip can implement the communication method provided in the foregoing method embodiments.

An embodiment of this application further provides a chip. The chip is coupled to a memory, and the chip is configured to implement a communication method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may alternatively be stored in a computer-readable memory that can indicate a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, comprising:

receiving, by a first terminal device, first downlink control information DCI from a network device, wherein the first DCI indicates at least one time domain range and/or at least one frequency domain range;
determining, by the first terminal device, the at least one time domain range and/or the at least one frequency domain range based on the first DCI; and

determining, by the first terminal device in all transmission resources in the at least one time domain range and/or the at least one frequency domain range, whether some transmission resources can be used by the first terminal device to transmit data.

2. The method according to claim 1, wherein that the first DCI indicates the at least one time domain range comprises:
   the first DCI indicates a time domain position in which a first physical sidelink feedback channel PSFCH is located, the time domain position in which the first PSFCH is located corresponds to a plurality of slots, and all or some of the plurality of slots are a first time domain range, and the at least one time domain range comprises the first time domain range.

3. The method according to claim 1, wherein that the first DCI indicates the at least one time domain range comprises:
   the first DCI is used to determine a first time domain position and a first time gap, a range from a second time domain position to the first time domain position is a second time domain range, the at least one time domain range comprises the second time domain range, and the second time domain position is a time domain position determined based on a slot in which the first DCI is located and the first time gap.

4. The method according to claim 1, wherein that the first DCI indicates the at least one time domain range comprises:
   the first DCI indicates a third time domain position and a fourth time domain position, a range from the third time domain position to the fourth time domain position is a third time domain range, and the at least one time domain range comprises the third time domain range.

5. The method according to claim 1, wherein that the first DCI indicates the at least one time domain range comprises:
   the first DCI is used to determine N time domain positions, a start position of each of N time domain ranges is one of the N time domain positions, duration of each time domain range is first duration, the at least one time domain range comprises the N time domain ranges, and N is an integer greater than or equal to 1.

6. The method according to claim 1, wherein that the first DCI indicates the at least one time domain range comprises:
   the first DCI indicates a first transmission resource, the first transmission resource corresponds to a second PSFCH, a plurality of slots corresponding to the second PSFCH are a fourth time domain range, and the at least one time domain range comprises the fourth time domain range.

7. The method according to any one of claims 1 to 6, wherein that the first DCI indicates the at least one frequency domain range comprises:
   the first DCI indicates a first frequency domain position and a second frequency domain position, a range from the first frequency domain position to the second frequency domain position is a first frequency domain range, and the at least one frequency domain range comprises the first frequency domain range.

8. The method according to any one of claims 1 to 6, wherein that the first DCI indicates the at least one frequency domain range comprises:
   the first DCI is used to determine M frequency domain positions, a start position of each of M frequency domain ranges is one of the M frequency domain positions, a continuous frequency bandwidth of each frequency domain range is a first frequency bandwidth, the at least one frequency domain range comprises the M frequency domain ranges, and M is an integer greater than or equal to 1.

9. The method according to any one of claims 1 to 8, wherein when the at least one time domain range is a plurality of time domain ranges, the method further comprises:
   when the first terminal device determines that the some transmission resources used by the first terminal device to transmit the data do not exist in the all transmission resources, sending, by the first terminal device, transmission failure information to the network device based on a time domain position in which a PSFCH corresponding to a last time domain range in the at least one time domain range is located.

10. The method according to any one of claims 1 to 8, wherein when the first terminal device determines that the some transmission resources used by the first terminal device to transmit the data do not exist in the all transmission resources, the method further comprises:
    determining, by the first terminal device in a first resource pool, a transmission resource used by the first terminal device to transmit the data, wherein the first resource pool comprises a plurality of transmission resources used to transmit data.

11. The method according to claim 10, wherein the method further comprises:
    sending, by the first terminal device, transmission success information to the network device.

12. The method according to claim 10 or 11, wherein the determining, by the first terminal device in a first resource pool, a transmission resource used by the first terminal device to transmit the data comprises: determining, by the first terminal device in the first resource pool in a packet delay budget PDB, the transmission resource used by the first terminal device to transmit the data.

13. The method according to any one of claims 10 to 12, wherein the method further comprises:

determining, by the first terminal device in the first resource pool in a fifth time domain position, that the first transmission resource can be used by the first terminal device to transmit the data, and the fifth time domain position is a time domain position determined by the first terminal device for sending physical uplink control channel PUCCH information; and
determining, by the first terminal device, that a priority of sending the PUCCH information in the fifth time domain position is higher than a priority of sending the data in the fifth time domain position.

14. The method according to any one of claims 10 to 13, wherein when the first terminal device determines that the transmission resource used by the first terminal device to transmit the data does not exist in the first resource pool, the method further comprises: sending, by the first terminal device, a first scheduling request to the network device, wherein the first scheduling request is used to request the network device to reschedule a transmission resource for the first terminal device.

15. The method according to any one of claims 1 to 8, wherein when the first terminal device determines that the some transmission resources used by the first terminal device to transmit the data do not exist in the all transmission resources, the method further comprises: sending, by the first terminal device, first information to the network device, wherein the first information indicates that the first terminal device determines that the some transmission resources used by the first terminal device to transmit the data do not exist in the all transmission resources.

16. The method according to claim 15, wherein the first information comprises a first bit, and the first information indicates, by using the first bit, that the first terminal device determines that the some transmission resources used by the first terminal device to transmit the data do not exist in the all transmission resources.

17. The method according to any one of claims 1 to 8, wherein when the first terminal device determines that the some transmission resources used by the first terminal device to transmit the data do not exist in the all transmission resources, the method further comprises: skipping, by the first terminal device, sending PUCCH information to the network device.

18. A communication method, comprising:

determining, by a network device, first downlink control information DCI, wherein the first DCI indicates at least one time domain range and/or at least one frequency domain range, some transmission resources in all transmission resources in the at least one time domain range and/or the at least one frequency domain range are used by a first terminal device to determine whether the transmission resources can be used by the first terminal device to transmit data; and
sending, by the network device, the first DCI to the first terminal device.

19. The method according to claim 18, wherein that the first DCI indicates the at least one time domain range comprises: the first DCI indicates a time domain position in which a first physical sidelink feedback channel PSFCH is located, the time domain position in which the first PSFCH is located corresponds to a plurality of slots, and all or some of the plurality of slots are a first time domain range, and the at least one time domain range comprises the first time domain range.

20. The method according to claim 18, wherein that the first DCI indicates the at least one time domain range comprises: the first DCI is used to determine a first time domain position and a first time gap, a range from a second time domain position to the first time domain position is a second time domain range, the at least one time domain range comprises the second time domain range, and the second time domain position is a time domain position determined based on a slot in which the first DCI is located and the first time gap.

21. The method according to claim 18, wherein that the first DCI indicates the at least one time domain range comprises: the first DCI indicates a third time domain position and a fourth time domain position, a range from the third time domain position to the fourth time domain position is a third time domain range, and the at least one time domain range comprises the third time domain range.

22. The method according to claim 18, wherein that the first DCI indicates the at least one time domain range comprises:

    the first DCI is used to determine N time domain positions, a start position of each of N time domain ranges is one of the N time domain positions, duration of each time domain range is first duration, the at least one time domain range comprises the N time domain ranges, and N is an integer greater than or equal to 1.

23. The method according to claim 18, wherein that the first DCI indicates the at least one time domain range comprises:

    the first DCI indicates a first transmission resource, the first transmission resource corresponds to a second PSFCH, a plurality of slots corresponding to the second PSFCH are a fourth time domain range, and the at least one time domain range comprises the fourth time domain range.

24. The method according to any one of claims 18 to 23, wherein that the first DCI indicates the at least one frequency domain range comprises:

    the first DCI indicates a first frequency domain position and a second frequency domain position, a range from the first frequency domain position to the second frequency domain position is a first frequency domain range, and the at least one frequency domain range comprises the first frequency domain range.

25. The method according to any one of claims 18 to 23, wherein that the first DCI indicates the at least one frequency domain range comprises:

    the first DCI is used to determine M frequency domain positions, a start position of each of M frequency domain ranges is one of the M frequency domain positions, a continuous frequency bandwidth of each frequency domain range is a first frequency bandwidth, the at least one frequency domain range comprises the M frequency domain ranges, and M is an integer greater than or equal to 1.

26. The method according to any one of claims 18 to 25, wherein when the at least one time domain range is a plurality of time domain ranges, the method further comprises:

    receiving, by the network device, transmission failure information from the first terminal device based on a time domain position in which a PSFCH corresponding to a last time domain range in the at least one time domain range is located, wherein the transmission failure information is sent by the first terminal device when the first terminal device determines that the some transmission resources used by the first terminal device to transmit the data do not exist in the all transmission resources.

27. The method according to any one of claims 18 to 25, wherein the method further comprises:

    receiving, by the network device, first information from the first terminal device, wherein the first information indicates that the first terminal device determines that the some transmission resources used by the first terminal device to transmit the data do not exist in the all transmission resources.

28. The method according to claim 27, wherein the first information comprises a first bit, and the first information indicates, by using the first bit, that the first terminal device determines that the some transmission resources used by the first terminal device to transmit the data do not exist in the all transmission resources.

29. A communication apparatus, comprising a memory, a processor, and a transceiver, wherein

    the memory is configured to store computer instructions;
    the transceiver is configured to receive and send information; and
    the processor is coupled to the memory, and is configured to invoke the computer instructions in the memory, to perform the method according to any one of claims 1 to 17 through the transceiver.

30. A communication apparatus, comprising a memory, a processor, and a transceiver, wherein

    the memory is configured to store computer instructions;
    the transceiver is configured to receive and send information; and
    the processor is coupled to the memory, and is configured to invoke the computer instructions in the memory, to perform the method according to any one of claims 18 to 28 through the transceiver.

31. A computer-readable storage medium, wherein the computer-readable storage medium stores computer-executable instructions, and when being invoked by a computer, the computer-executable instructions perform the method according to any one of claims 1 to 17, or perform the method according to any one of claims 18 to 28.

32. A computer program product, comprising instructions, wherein when the instructions are run on a computer, the method according to any one of claims 1 to 17 or the method according to any one of claims 18 to 28 is performed.

33. A chip, wherein the chip is coupled to a memory and is configured to read and execute program instructions stored in the memory, to implement the method according to any one of claims 1 to 17, or implement the method according to any one of claims 18 to 28.

First terminal
device

Second terminal
device

Network device

FIG. 1

①DCI format 3_0

②PSCCH/PSSCH

④PUCCH

UE 1

③PSFCH

UE 2

Network device

FIG. 2

PDCCH
(DCI format 3_0)

PUCCH

Time gap
(time gap)

sl-PSFCH-to-PUCCH

PSCCH/PSSCH

PSFCH

Time domain
(time)

FIG. 3

```
┌─────────────────────┐              ┌─────────────────────┐
│   Network device    │              │ First terminal device│
└─────────────────────┘              └─────────────────────┘
┌─────────────────────────┐
│ 401: Determine first DCI│
└─────────────────────────┘
                   402: First DCI

              ┌──────────────────────────────────────────┐
              │ 403: Determine at least one time domain range│
              │ and/or at least one frequency domain range based│
              │            on the first DCI               │
              └──────────────────────────────────────────┘

              ┌──────────────────────────────────────────┐
              │ 404: Determine, in all transmission resources in│
              │ the at least one time domain range and/or the at│
              │ least one frequency domain range, whether some│
              │ transmission resources can be used by the first│
              │         terminal device to transmit data  │
              └──────────────────────────────────────────┘
```

FIG. 4

A first transmission
resource is preempted

Second
PSFCH

A plurality of slots

FIG. 5

At least one time
domain range

PDCCH
(First DCI)

PUCCH

Time gap
(time gap)

sl-PSFCH-to-PUCCH

PSCCH/PSSCH

PSFCH

Time domain
(time)

FIG. 6

PDCCH
(First DCI)

PUCCH

Time gap
(time gap)

A transmission
resource is not
obtained
through
contention

PSFCH

sl-PSFCH-to-PUCCH

Continue to
contend for a
transmission
resource

Continue to contend for a
transmission resource

Fifth time
domain
position

Time domain
(time)

FIG. 7

Indicating that a
channel is not
obtained through
contention

PDCCH
(First DCI)

PUCCH (1 0 or 1 1)

Time gap
(time gap)

A transmission
resource is not
obtained through
contention

PSFCH

sl-PSFCH-to-PUCCH

Time domain
(time)

FIG. 8

FIG. 9

FIG. 10

FIG. 11

<table>
<tr><td colspan="2" align="center"><strong>INTERNATIONAL SEARCH REPORT</strong></td><td colspan="2">International application No.<br><strong>PCT/CN2023/070759</strong></td></tr>
</table>

**A. CLASSIFICATION OF SUBJECT MATTER**

H04W72/02(2009.01)i;H04W72/04(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; CNKI; ENTXTC; DWPI; 3GPP: 下行控制信息, 指示, 时域, 时间, 频域, 频率, 范围, 全部, 部分, 资源调度, 直连反馈信道, 侧链, 旁链, DCI, identify, time domain, frequency domain, range, all, full, part, resource schedule, PSFCH, sidelink, SL

**C. DOCUMENTS CONSIDERED TO BE RELEVANT**

| Category* | Citation of document, with indication, where appropriate, of the relevant passages | Relevant to claim No. |
|---|---|---|
| A | CN 109219131 A (HUAWEI TECHNOLOGIES CO., LTD.) 15 January 2019 (2019-01-15) description, paragraphs [0088]-[0089], and figure 1 | 1-33 |
| A | CN 109496440 A (BEIJING XIAOMI MOBILE SOFTWARE CO., LTD.) 19 March 2019 (2019-03-19) entire document | 1-33 |
| A | CN 113439468 A (HUAWEI TECHNOLOGIES CO., LTD.) 24 September 2021 (2021-09-24) entire document | 1-33 |
| A | US 2021400732 A1 (QUALCOMM INC.) 23 December 2021 (2021-12-23) entire document | 1-33 |
| A | CMCC. "Discussion on mode-1 resource allocation for NR sidelink" *3GPP TSG RAN WG1 #99 R1-1912534*, 22 November 2019 (2019-11-22), entire document | 1-33 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 March 2023** | **29 March 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/070759**

| Patent document cited in search report | | | Publication date (day/month/year) | Patent family member(s) | | | Publication date (day/month/year) |
|---|---|---|---|---|---|---|---|
| CN | 109219131 | A | 15 January 2019 | US | 2020137738 | A1 | 30 April 2020 |
| | | | | US | 11483821 | B2 | 25 October 2022 |
| | | | | WO | 2019007154 | A1 | 10 January 2019 |
| | | | | EP | 3627939 | A1 | 25 March 2020 |
| | | | | EP | 3627939 | A4 | 16 September 2020 |
| CN | 109496440 | A | 19 March 2019 | WO | 2020077568 | A1 | 23 April 2020 |
| | | | | US | 2021321449 | A1 | 14 October 2021 |
| CN | 113439468 | A | 24 September 2021 | WO | 2021147104 | A1 | 29 July 2021 |
| US | 2021400732 | A1 | 23 December 2021 | WO | 2021257209 | A1 | 23 December 2021 |

Form PCT/ISA/210 (patent family annex) (July 2022)

**EP 4 447 579 A1**

**REFERENCES CITED IN THE DESCRIPTION**

**Patent documents cited in the description**

- CN 202210023636

- CN 202210179902